(19)

Europäisches Patentamt

European Patent Office

Office européen des brevets

(11) **EP 4 123 522 A1**

(12) **EUROPEAN PATENT APPLICATION**
published in accordance with Art. 153(4) EPC

(43) Date of publication:
**25.01.2023 Bulletin 2023/04**

(21) Application number: **21771857.6**

(22) Date of filing: **17.03.2021**

(51) International Patent Classification (IPC):
**G06Q 10/00** (2012.01)   **B65F 5/00** (2006.01)
**G06Q 50/26** (2012.01)

(52) Cooperative Patent Classification (CPC):
**B65F 5/00; G06Q 10/00; G06Q 50/26**

(86) International application number:
**PCT/JP2021/010945**

(87) International publication number:
**WO 2021/187545 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.03.2020   JP 2020048411**
**21.04.2020   JP 2020075638**

(71) Applicant: **Kyocera Corporation**
**Kyoto-shi, Kyoto 612-8501 (JP)**

(72) Inventors:
• **FUJISAWA, Ryuta**
**Kyoto-shi, Kyoto 612-8501 (JP)**

• **SUGIHARA, Kazunari**
**Kyoto-shi, Kyoto 612-8501 (JP)**
• **HACHIKI, Nobuhiko**
**Kyoto-shi, Kyoto 612-8501 (JP)**
• **UCHISHIBA, Hirofumi**
**Kyoto-shi, Kyoto 612-8501 (JP)**
• **TERAI, Ryota**
**Kyoto-shi, Kyoto 612-8501 (JP)**
• **SUZUKI, Yuki**
**Kyoto-shi, Kyoto 612-8501 (JP)**
• **TAKAHASHI, Masaya**
**Kyoto-shi, Kyoto 612-8501 (JP)**

(74) Representative: **TBK**
**Bavariaring 4-6**
**80336 München (DE)**

(54) **RESOURCE RECOVERY SYSTEM, SERVER APPARATUS, RESOURCE RECOVERY APPARATUS, AND METHOD**

(57)   A resource recovery system 1 for recovering articles to be recycled as a resource includes a plurality of resource recovery apparatuses 100 that recovers the discarded articles by a person discarding waste and a server apparatus 200 that manages the plurality of resource recovery apparatuses 100. The server apparatus 200 generates suggestion information including information indicating a suggestion for a location of a target resource recovery apparatus 100, based on a utilization result and a location of each of the plurality of resource recovery apparatuses 100. The target resource recovery apparatus 100 is the resource recovery apparatus 100 to be newly placed and/or the resource recovery apparatus 100 that has been located and of which location is to be changed.

FIG. 1

**Description**

TECHNICAL FIELD

The present invention relates to a resource recovery system, a server apparatus, a resource recovery apparatus, and a method.

BACKGROUND OF INVENTION

A known technique for managing articles such as a commercial product uses an electronic tag attached to the articles.

Patent Literature 1 describes a method for, in a resource recovery apparatus (a so-called trash bin) that recovers a waste being discarded articles by a person discarding waste (or a consumer), detecting an electronic tag included in the articles and invalidating the detected electronic tag to make data stored in the electronic tag unreadable.

According to the method described in Patent Literature 1, invalidating the electronic tag attached to the waste may protect the privacy of a person discarding the waste.

CITATION LIST

PATENT LITERATURE

Patent Literature 1: Japanese Patent Application Publication (Translation of PCT Application) No. 2009-516262

SUMMARY

In a first aspect, a resource recovery system is a system for recovering articles to be recycled as a resource. The resource recovery system includes a plurality of resource recovery apparatuses that recovers the discarded articles by a person discarding waste and a server apparatus managing the plurality of resource recovery apparatuses. The server apparatus generates suggestion information including information indicating a suggestion for a location of a target resource recovery apparatus, based on a utilization result of each of the plurality of resource recovery apparatuses and a location of each of the plurality of resource recovery apparatuses. The target resource recovery apparatus is a resource recovery apparatus to be newly placed and/or a resource recovery apparatus that has been located and of which location is to be changed.

In a second aspect, a server apparatus is an apparatus used in a resource recovery system for recovering articles to be recycled as a resource. The server apparatus includes a communicator configured to communicate with a plurality of resource recovery apparatuses that recovers the discarded articles by a person discarding waste, and a processing unit configured to generate suggestion information including information indicating a suggestion for a location of a target resource recovery apparatus, based on a utilization result of each of the plurality of resource recovery apparatuses and a location of each of the plurality of resource recovery apparatuses. The target resource recovery apparatus is a resource recovery apparatus to be newly placed and/or a resource recovery apparatus that has been already placed and of which location will be changed.

In a third aspect, a resource recovery apparatus is an apparatus, in a resource recovery system for recovering articles to be recycled as a resource, to recover the discarded articles by a person discarding waste. The resource recovery apparatus includes a measurer configured to generate measurement information for a server apparatus to specify a utilization result of the resource recovery apparatus, a positioner configured to generate location information indicating a location of the resource recovery apparatus, and a communicator configured to transmit, to the server apparatus, the measurement information and the location information in association with each other.

In a fourth aspect, a method is performed by a resource recovery system for recovering articles to be recycled as a resource. The method includes communicating with a plurality of resource recovery apparatuses that recover the discarded articles by a person discarding waste, generating suggestion information including information indicating a suggestion for a location of a target resource recovery apparatus, based on a utilization result of each of the plurality of resource recovery apparatuses and a location of each of the plurality of resource recovery apparatuses. The target resource recovery apparatus is a resource recovery apparatus to be newly placed and/or a resource recovery apparatus that has been already placed and of which location will be changed.

In a fifth aspect, a resource recovery system is a system for recovering articles to be recycled as a resource. The resource recovery system includes a resource recovery apparatus configured to recover discarded articles, a terminal apparatus owned by a consumer, and a server apparatus configured to communicate with the resource recovery apparatus and the terminal apparatus. The resource recovery apparatus transmits a first message including measurement information for specifying the remaining capacity of the resource recovery apparatus to the server apparatus. The server apparatus executes notification processing to notify the consumer of information indicating a location of the resource recovery apparatus including a predetermined remaining capacity, based on the first message.

In a sixth aspect, a server apparatus is an apparatus, in a resource recovery system for recovering articles to be recycled as a resource, to communicate with a resource recovery apparatus recovering discarded articles and a terminal apparatus owned by a consumer. The server apparatus includes a communicator configured to receive a first message including measurement information to specify a remaining capacity of the resource recovery apparatus and a processing unit configured to execute notification processing to notify the consumer of information indicating a location of the resource recovery apparatus including a predetermined remaining capacity, based on the first message.

In a seventh aspect, a terminal apparatus is an apparatus owned by a consumer, in a resource recovery system for recovering articles to be recycled as a resource. The terminal apparatus includes a communicator configured to receive, from a server apparatus managing a resource recovery apparatus that recovers discarded articles, a message including information indicating a location of the resource recovery apparatus including a predetermined remaining capacity, and a controller configured to notify the consumer of the location of the resource recovery apparatus including the predetermined remaining capacity, based on the message.

In an eighth aspect, in a resource recovery system for recovering articles to be recycled as a resource, a program includes causing a terminal apparatus owned by a consumer to execute processing to receive, from a server apparatus managing a resource recovery apparatus that recovers discarded articles, a message including information indicating a location of the resource recovery apparatus including a predetermined remaining capacity and processing to notify the consumer of the location of the resource recovery apparatus including the predetermined remaining capacity, based on the message.

BRIEF DESCRIPTION OF THE DRAWINGS

FIG. 1 is a diagram illustrating a configuration of a resource recovery system according to a first embodiment.
FIG. 2 is a diagram illustrating a configuration example of a resource recovery apparatus according to the first embodiment.
FIG. 3 is a diagram illustrating a configuration example of a measurement information message according to the first embodiment.
FIG. 4 is a diagram illustrating a configuration example of a server apparatus according to the first embodiment.
FIG. 5 is a diagram illustrating a configuration example of measurement history information according to the first embodiment.
FIG. 6 is a diagram illustrating a configuration example of reference information according to the first embodiment.
FIG. 7 is a diagram illustrating an example of a method of specifying a region X according to the first embodiment.
FIG. 8 is a diagram illustrating an exemplary operation of the resource recovery system according to the first embodiment.
FIG. 9 is a diagram indicating a variation of the reference information according to the first embodiment.
FIG. 10 is a diagram illustrating a variation of the server apparatus according to the first embodiment.
FIG. 11 is a diagram illustrating a configuration example of event information according to the first embodiment.
FIG. 12 is a diagram illustrating a configuration of a resource recovery system according to a second embodiment.
FIG. 13 is a diagram illustrating a configuration example of a measurement information message according to the second embodiment.
FIG. 14 is a diagram illustrating a configuration example of a terminal apparatus according to the second embodiment.
FIG. 15 is a diagram illustrating a configuration example of a location information message according to an embodiment.
FIG. 16 is a diagram illustrating a configuration example of a guide information message according to the second embodiment.
FIG. 17 is a diagram illustrating a screen display example in the terminal apparatus according to the second embodiment.
FIG. 18 is a diagram illustrating a configuration example of a server apparatus according to the second embodiment.
FIG. 19 is a diagram illustrating an entire operation example of the resource recovery system according to the second embodiment.
FIG. 20 is a diagram illustrating a configuration of a server apparatus according to a variation of the second embodiment.
FIG. 21 is a diagram illustrating a configuration of a guide information message according to the variation of the second embodiment.

FIG. 22 is a diagram illustrating a screen display in a display according to the variation of the second embodiment.

FIG. 23 is a diagram illustrating a configuration of a measurement information message according to the variation of the second embodiment.

FIG. 24 is a diagram illustrating an entire operation of a resource recovery system according to the variation of the second embodiment.

FIG. 25 is a diagram illustrating a configuration of a resource recovery system according to another embodiment of the second embodiment.

DESCRIPTION OF EMBODIMENTS

Invalidating an electronic tag included in a waste is not preferable from the perspective of data utilization. Collecting and analyzing data concerning the waste could create new value.

An object of the present disclosure is creating new value by utilizing data concerning discarded articles by a person discarding waste (or a consumer).

First and second embodiments will be described with reference to the drawings. In the description of the drawings, the same or similar parts are denoted by the same or similar reference signs.

Overview of First Embodiment

When an event is held, for example, a large amount of wastes may be generated at a venue or in a surrounding urban area. In such a case, if enough resource recovery apparatuses are not placed in a geographical region where a large amount of wastes are generated, the resource recovery apparatuses will not be able to collect the large amount of wastes, and a large amount of personnel will need to be allocated to collect the wastes.

In view of such a problem, in a first embodiment, a resource recovery system can appropriately determine a location of a resource recovery apparatus.

In the first embodiment, the resource recovery system is a system for recovering articles to be recycled as a resource. The resource recovery system includes a plurality of resource recovery apparatuses that recovers the discarded articles by a person discarding waste and a server apparatus managing the plurality of resource recovery apparatuses. The server apparatus generates suggestion information including information indicating a suggestion for a location of a target resource recovery apparatus, based on a utilization result of each of the plurality of resource recovery apparatuses and a location of each of the plurality of resource recovery apparatuses. The target resource recovery apparatus is a resource recovery apparatus to be newly placed and/or a resource recovery apparatus that has been already placed and of which location will be changed. Note that the person discarding waste includes a consumer. The following will mainly describe an example in which the person discarding waste is a consumer.

As described above, in the resource recovery system according to the first embodiment, the location of each resource recovery apparatus can be appropriately determined by generating the suggestion information including the information indicating the suggestion for the location of the target resource recovery apparatus, based on the utilization result and the location of each of the plurality of resource recovery apparatuses.

First Embodiment

Configuration Example of Resource Recovery System

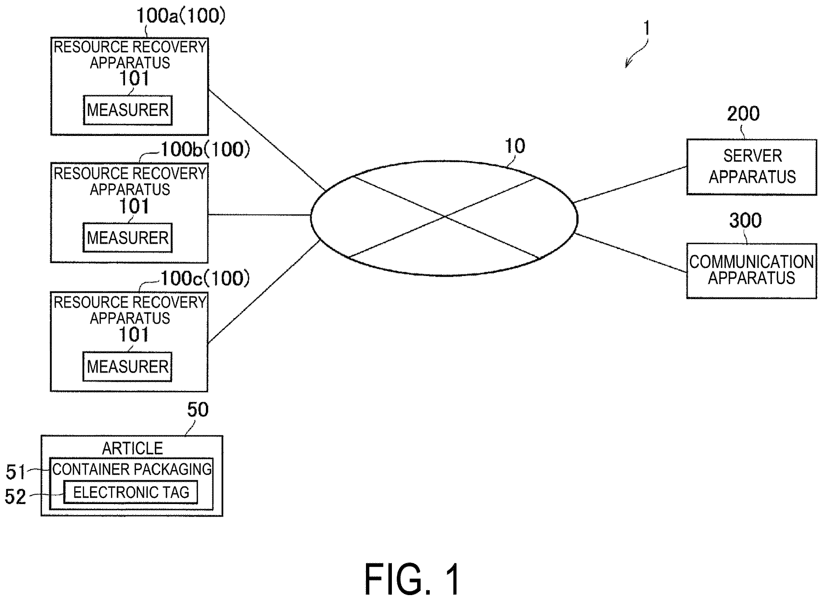

First, a configuration example of the resource recovery system according to the first embodiment will be described. The resource recovery system is a system for recovering articles to be recycled as a resource. Here, the articles may be any article so long as it can be recycled as a resource, and, for example, includes a product and/or a container packaging of the product. FIG. 1 is a diagram illustrating a configuration of a resource recovery system 1 according to the first embodiment.

As illustrated in FIG. 1, the resource recovery system 1 includes a plurality of resource recovery apparatuses 100a, 100b, and 100c, a server apparatus 200, and a communication apparatus 300. The resource recovery apparatuses 100a, 100b, and 100c are hereinafter simply referred to as the resource recovery apparatus(es) 100 unless otherwise distinguished.

The resource recovery apparatuses 100, the server apparatus 200, and the communication apparatus 300 are connected to a network 10. The network 10 includes at least one selected from the group consisting of a Local Area Network (LAN), a Wide Area Network (WAN), and the Internet.

An article 50 may be a product, for example, a food or a drink. Hereinafter, an example in which the article 50 is a product will be described. The article 50 includes a container packaging 51 with an electronic tag 52. The electronic tag 52 may be attached to a product body except for the container packaging 51. At least a product identifier for identifying the article 50 is written in the electronic tag 52. The product identifier is assumed to be an individual identifier of the article 50, but the product identifier may be a product name of the article 50, or may be a set of an individual identifier and a product name.

The electronic tag 52 is a passive, active, or semi-active electronic tag 52. In the following example, a passive electronic tag 52 is mainly used. The passive electronic tag 52 can generate electricity by receiving a radio wave and generate drive power, and thus, needs no battery.

The resource recovery apparatus 100 is an apparatus that recovers a waste that is discarded articles by a consumer. The waste is, for example, the container packaging 51 of the article 50. The resource recovery apparatus 100 is a trash bin having a communication function, and may be referred to as a smart trash bin. The resource recovery apparatus 100 may be provided indoors (for example, inside a house of the consumer or inside a shop), or outdoors (around a shop or on a road).

The resource recovery apparatus 100 may be a trash bin that is moved by a worker and temporarily placed at an event venue or the like. The resource recovery apparatus 100 may be a self-propelled trash bin operated by remote control.

The resource recovery apparatus 100 may be an apparatus attached to an existing trash bin, or an apparatus configuring a part of the trash bin. Types of wastes to be recovered (that is garbage sorting types) may be configured for the resource recovery apparatus 100.

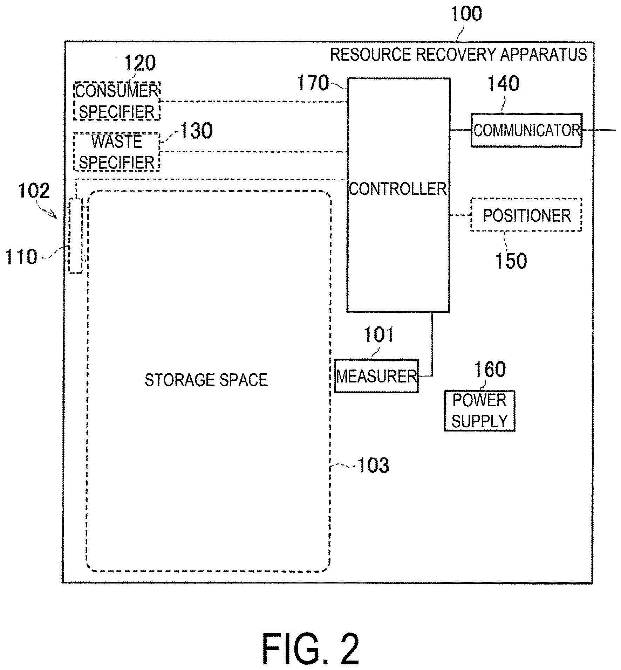

The resource recovery apparatus 100 includes a measurer 101. The measurer 101 measures a waste amount that is an amount of wastes accumulated by the resource recovery apparatus 100 or a remaining capacity of the resource recovery apparatus 100, and transmits measurement information including information indicating a result of the measurement to the server apparatus 200. The waste amount may be at least one selected from the group consisting of a weight of the wastes accumulated in the resource recovery apparatus 100, the number of times a waste is put into the resource recovery apparatus 100, and a time period of putting a waste into the resource recovery apparatus 100. The measurement information may include information indicating the number of times an opening/closing 110 provided to the resource recovery apparatus 100 is opened (the number of times a waste is put into) (see FIG. 2) and/or information indicating a length of a time period when the opening/closing 110 is open (the time period when a waste is put into).

The server apparatus 200 is an apparatus managing the plurality of resource recovery apparatuses 100. The server apparatus 200 communicates with the resource recovery apparatuses 100 and the communication apparatus 300 via the network 10. The server apparatus 200 specifies a utilization result of each resource recovery apparatus 100, based on the measurement information received from each resource recovery apparatus 100. The utilization result refers to the extent to which the resource recovery apparatus 100 is utilized, and for example, a waste amount per unit time can be used as the utilization result.

The server apparatus 200 specifies a location of each resource recovery apparatus 100. The location of each resource recovery apparatus 100 may be registered in the server apparatus 200 in advance. In this case, the server apparatus 200 references information of the registered location to specify the location of each resource recovery apparatus 100.

The server apparatus 200 may receive the location information from each resource recovery apparatus 100 to specify the location of each resource recovery apparatus 100. For example, the resource recovery apparatus 100 has a positioning function, generates location information indicating a location of the resource recovery apparatus 100 itself by the positioning function, and transmits the generated location information in association with the measurement information to the server apparatus 200. As a result, the server apparatus 200 can specify the location of each resource recovery apparatus 100 even when the resource recovery apparatus 100 moves.

The server apparatus 200 generates suggestion information including information indicating a suggestion for a location of a target resource recovery apparatus, based on the utilization result of each resource recovery apparatus 100 and the location of each resource recovery apparatus 100. Here, the target resource recovery apparatus is the resource recovery apparatus 100 to be newly placed and/or the resource recovery apparatus 100 that has been already placed and of which location will be changed. This makes it possible to appropriately determine the location of the resource recovery apparatus 100.

For example, the server apparatus 200 may determine a geographical region where the waste amount per unit time exceeds a prescribed amount (hereinafter, referred to as a "region X"), based on the utilization result and location of each of the plurality of resource recovery apparatuses 100. The server apparatus 200 generates the suggestion information including information suggesting a position in the determined region X as the location of the target resource recovery apparatus. This makes it possible to place the appropriate number of resource recovery apparatuses 100 at a geographical region where a large amount of wastes is generated.

The server apparatus 200 may generate the suggestion information including information suggesting changing the location of the resource recovery apparatus 100 that has been already placed outside the region X, of the plurality of resource recovery apparatuses 100, to a position inside the region X. This makes it possible to move a resource recovery apparatus 100 with a low usage frequency to the region X, and thus, increase the usage frequency of the resource recovery apparatus 100.

The server apparatus 200 may generate the suggestion information further including information suggesting the storage capacity of the target resource recovery apparatus to store wastes. The storage capacity refers to a size (volume) of a storage space 103. For example, the server apparatus 200 determines the storage capacity recommended as the storage capacity of the resource recovery apparatus 100 to be newly placed and includes information indicating the determined storage capacity in the suggestion information.

The server apparatus 200 may generate the suggestion information further including information suggesting a garbage sorting type indicating types of articles to be recovered by the target resource recovery apparatus, based on types of the articles recovered by each resource recovery apparatus 100. This makes it possible to appropriately determine the garbage sorting type configured for the target resource recovery apparatus.

Here, the type of article recovered by each resource recovery apparatus 100 may be specified depending on the garbage sorting type configured in the resource recovery apparatus 100. The type of article recovered by each resource recovery apparatus 100 may be specified based on a result of the specification in each resource recovery apparatus 100. For example, each resource recovery apparatus 100, which includes a waste specifier 130 for specifying a waste (see FIG. 2), notifies the server apparatus 200 of the result of the specification by the waste specifier 130. The server apparatus 200 specifies the type of waste to be recovered by each resource recovery apparatus 100, based on the result of the specification by the waste specifier 130.

The server apparatus 200 transmits the generated suggestion information to the communication apparatus 300. The server apparatus 200 may transmit the suggestion information to the communication apparatus 300 in response to a request from the communication apparatus 300. The communication apparatus 300 is a server or communication terminal belonging to a prescribed business operator. The prescribed business operator is a business operator to place the target resource recovery apparatus, or a business operator to change the location of the target resource recovery apparatus. These business operators may be the same entity.

Configuration Example of Resource Recovery Apparatus A configuration example of the resource recovery apparatus 100 will be described. FIG. 2 is a diagram illustrating a configuration example of the resource recovery apparatus 100. In FIG. 2, dashed lines illustrate components that are optional.

As illustrated in FIG. 2, the resource recovery apparatus 100 includes, besides the measurer 101 described above, an opening 102, the storage space 103, an opening/closing 110, a consumer specifier 120, the waste specifier (article specifier) 130, a communicator 140, a positioner 150, a power supply 160, and a controller 170.

The opening 102 is an opening provided between a front surface or a lateral surface of the resource recovery apparatus 100 and the storage space 103. A waste is put into the storage space 103 via the opening 102.

The storage space 103 is a space to store a waste. The storage space 103 may be provided with a replaceable container or trash bag.

The opening/closing 110 is provided to the opening 102 to open and close the opening 102 under control of the controller 170. The opening/closing 110 includes a lid (shutter) covering the opening 102 and an actuator opening and closing the lid. A state where the lid of the opening/closing 110 is open is referred to as an open state and a state where the lid is closed is referred to as a closed state.

The consumer specifier 120 specifies a consumer discarding a waste in the resource recovery apparatus 100 (that is, performs personal authentication), and outputs a consumer identifier indicating a result of the specification to the controller 170. The consumer specifier 120 may include a camera capturing an image of a consumer to specify the consumer by using a result of the capture. The consumer specifier 120 may include a bar code reader reading a bar code (or a two-dimensional code) from a ticket or mobile terminal owned by a consumer to specify the consumer by using a result of the reading. The consumer specifier 120 may include a wireless communicator that performs Near Field Communication (NFC) wireless communication with an IC card or mobile terminal owned by a consumer to specify the consumer using a result of the communication.

The waste specifier 130 specifies a waste (article 50) discarded by a consumer and outputs a product identifier indicating a result of the specification to the controller 170. The waste specifier 130 may include a tag reader reading a product identifier from the electronic tag 52 included in a waste to specify the article 50 using a result of the reading. The waste specifier 130 may include a camera capturing an image of a waste to determine the article 50 by use of a result of the capture. The waste specifier 130 may include a bar code reader reading a bar code (or a two-dimensional code) attached to a waste to specify the article 50 using a result of the reading. Hereinafter, a configuration in which the waste specifier 130 includes a tag reader will be mainly described.

The waste specifier 130 may not perform a read operation while the opening 102 is in the closed state but may perform the read operation while the opening 102 is in the open state. The read operation includes an operation to transmit a radio wave from the tag reader. Not performing the read operation while the opening 102 is in the closed state can reduce an amount of power consumption of the resource recovery apparatus 100. The waste specifier 130 may periodically perform an operation to collectively read product identifiers from the electronic tags 52 of the wastes accumulated in the storage space 103. When the number of product identifiers at this reading is increased compared to the previous reading, the controller 170 may recognize the increased product identifiers to be product identifiers of wastes newly discarded.

Note that the consumer specifier 120 and the waste specifier 130 may share at least a part of their functions. The consumer specifier 120 may specify the consumer in collaboration with the server apparatus 200. The waste specifier 130 may specify the product in collaboration with the server apparatus 200.

The measurer 101 measures a waste amount or a remaining capacity in the storage space 103 under control of the controller 170 and outputs the measurement information indicating a result of the measurement to the controller 170. The measurer 101 includes a weight sensor for measuring a weight of the waste accumulated in the storage space 103. The measurer 101 may include at least one selected from the group consisting of a sensor for measuring a height of the waste accumulated in the storage space 103 (for example, an ultrasonic sensor), a counter for counting the number of times a waste is put into (the number of times of switching between the open state and the closed state in the opening/closing 110), and a timer for measuring a time period when a waste is put into (a time period when the opening/closing 110 is in the open state).

Note that at least a part of functions of the measurer 101 and the waste specifier 130 may be shared. For example, the measurer 101 may include, in the measurement information, one or more product identifiers output by the waste specifier 130.

The communicator 140 includes a communication interface connected to the network 10 in a wired or wireless manner. The communicator 140 communicates with the server apparatus 200 via the network 10.

The positioner 150 generates location information indicating a location of the resource recovery apparatus 100 through positioning by use of positioning satellites, and outputs the generated location information to the controller 170. The positioner 150 includes a Global Navigation Satellite System (GNSS) receiver.

The power supply 160 supplies drive power to each component in the resource recovery apparatus 100. For example, the power supply 160 supplies the drive power used for the read operation by the waste specifier 130, and the drive power used for an open/close operation by the actuator of the opening/closing 110. The power supply 160 may include a primary battery or a secondary battery, or a power converter converting power from a commercial power system. The power supply 160 may include a power generator such as a photovoltaic cell. When the power supply 160 includes the power generator, battery change or external power feeding to the resource recovery apparatus 100 can be reduced.

The controller 170 controls the power supply 160 such that power output by the power generator included in the power supply 160 (for example, a photovoltaic cell) is used as the drive power described above. For example, the controller 170 controls the photovoltaic cell such that power generated by the photovoltaic cell can be used for drive power as it is when it is sunny. The controller 170 may charge the secondary battery or the like with the generated power when drive power is not needed. The controller 170 may use the power from the power system for charging the secondary battery or as drive power as it is when it is rainy, cloudy, or shady (when the photovoltaic cell does not generate power). Here, the controller 170 may determine the weather based on the output power from the photovoltaic cell, or may determine the weather based on weather information acquired from an external server via the communicator 140. The weather information is information indicating current weather and/or future weather of a region including the location of the resource recovery apparatus 100.

The controller 170 controls each component in the resource recovery apparatus 100. The controller 170 includes at least one processor and at least one memory electrically connected to the processor.

The controller 170 may switch the opening/closing 110 from the closed state to the open state if the consumer specified by using the consumer specifier 120 is a legitimate consumer (for example, the consumer registered in the server apparatus 200 in advance). On the other hand, the controller 170 may keep the opening/closing 110 in the closed state if the consumer specified by using the consumer specifier 120 is not a legitimate consumer. As a result, only a consumer having a legitimate authority can use the resource recovery apparatus 100, and illegal dumping such as discarding a dangerous article can be reduced.

Here, the controller 170 may make an inquiry or request concerning the specified consumer to or of the server apparatus 200 to determine whether the consumer is a legitimate consumer. Alternatively, the server apparatus 200 may determine whether the consumer is legitimate, and notify the resource recovery apparatus 100 of a result of the determination, and the controller 170 may control the opening and closing accordingly.

The controller 170 may switch the opening/closing 110 from the open state to the closed state when a close condition is satisfied after switching the opening/closing 110 from the closed state to the open state. The close condition includes at least one selected from the group consisting of 1) a condition that a certain time period elapses after switching to the open state, 2) a condition that the waste specifier 130 newly reads information from the electronic tag 52 attached to the waste, 3) a condition that a certain time period elapses after the waste specifier 130 newly reads the information from the electronic tag 52 attached to the waste, and 4) a condition that the consumer specifier 120 performs the authentication of the same consumer for the second time. The close condition 4) assumes such a case that, for example, the consumer holds an IC card over the consumer specifier 120 to switch the opening/closing 110 to the open state, and after discarding the waste, the consumer holds the IC card over the consumer specifier 120 to switch the opening/closing 110 to the closed state.

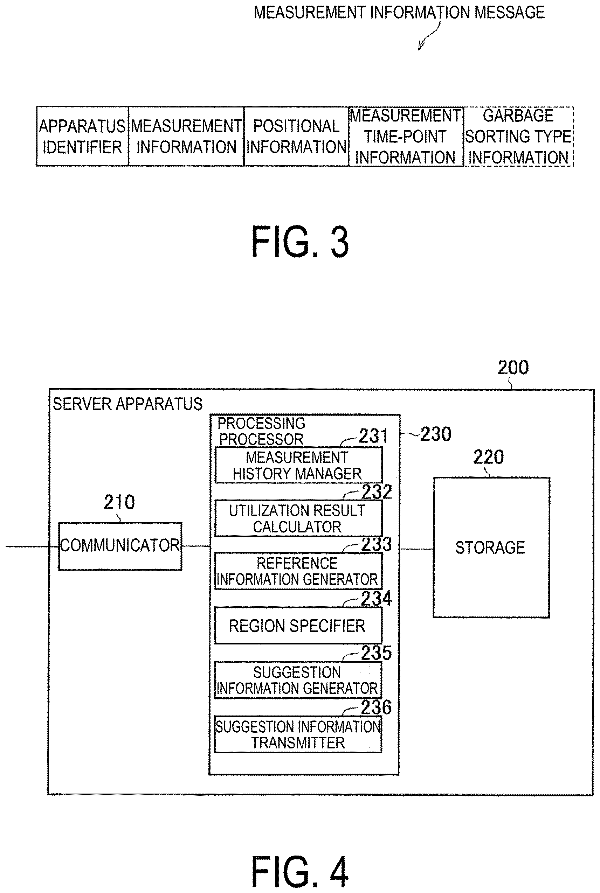

The controller 170 generates a measurement information message including the measurement information output by the measurer 101, and transmits the measurement information message via the communicator 140 to the server apparatus 200. The transmission of the measurement information message may be periodically performed, or may be performed in response to a request from the server apparatus 200. The measurement information message may include information other than the measurement information, for example, an apparatus identifier identifying the resource recovery apparatus 100. FIG. 3 is a diagram illustrating a configuration example of the measurement information message.

As illustrated in FIG. 3, the measurement information message includes the apparatus identifier of the resource recovery apparatus 100 transmitting the measurement information message, the measurement information output by the measurer 101, the location information output by the positioner 150, and measurement time-point information indicating a time point at which the measurer 101 performs measurement. The measurement information message may include a plurality of sets of the measurement information, the location information, and the measurement time-point information. When the garbage sorting type is configured for the resource recovery apparatus 100, the measurement information message may further include garbage sorting type information indicating the garbage sorting type.

When the measurement information is not changed since the last measurement information message has been transmitted, the controller 170 may include information that the measurement information is not changed as the measurement information in the current measurement information message, or may omit the transmission of the current measurement information message or the transmission of the current measurement information. When the location information is not changed since the last measurement information message has been transmitted, the controller 170 may include information that the location information is not changed as the location information in the current measurement information message, or may omit the transmission of the current location information.

Configuration Example of Server Apparatus

A configuration example of the server apparatus 200 will be described. FIG. 4 is a diagram illustrating a configuration example of the server apparatus 200.

As illustrated in FIG. 4, the server apparatus 200 includes a communicator 210, a storage 220, and a processing unit 230.

The communicator 210 includes a communication interface connected to the network 10 in a wired or wireless manner. The communicator 210 communicates with each resource recovery apparatus 100 and the communication apparatus 300 via the network 10. The communicator 210 receives a measurement information message from each resource recovery apparatus 100.

The storage 220 stores various types of information used for information processing executed by the processing unit 230. The storage 220 includes an auxiliary storage device such as a Hard Disk Drive (HDD) or a Solid State Drive (SSD). The processing unit 230 stores the information in the storage 220, or updates the information stored in the storage 220.

The processing unit 230 executes various types of information processing, based on the information received by the communicator 210 and the information stored in the storage 220. The processing unit 230 includes at least one processor and at least one memory electrically connected to the processor. The processor executes a program stored in the memory to perform a function of each of a measurement history manager 231, a utilization result calculator 232, a reference information generator 233, a region specifier 234, a suggestion information generator 235, and a suggestion information transmitter 236.

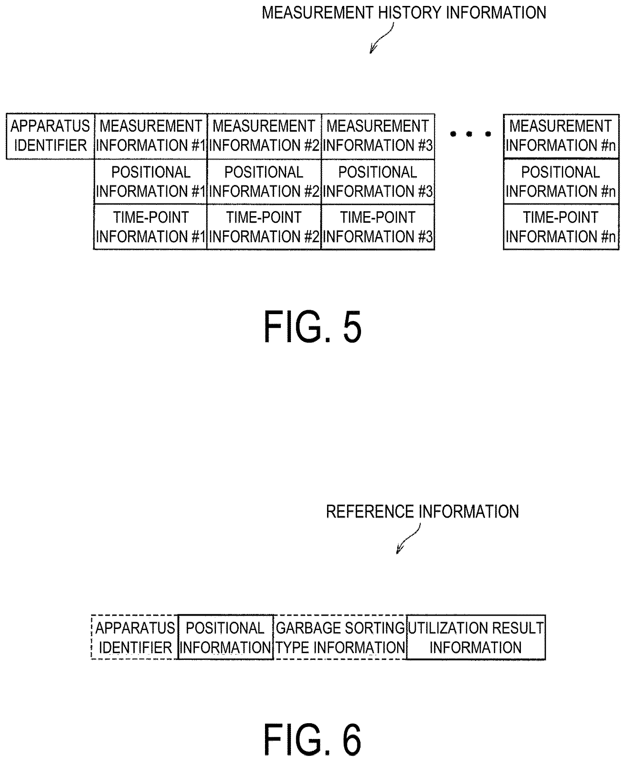

The measurement history manager 231 manages the measurement history information for each resource recovery apparatus 100, based on the measurement information message received by the communicator 210. FIG. 5 is a diagram illustrating a configuration example of the measurement history information.

As illustrated in FIG. 5, the measurement history information includes the apparatus identifier of the resource recovery apparatus 100 and a history of the measurement information obtained from the resource recovery apparatus 100 (measurement information #1, #2, #3, ..., #n). Each piece of measurement information is associated with the location information and the time-point information.

The utilization result calculator 232 calculates a waste amount per unit time of the resource recovery apparatus 100 at each location as a utilization result, based on the measurement history information. The utilization result calculator 232 groups a plurality of pieces of measurement information corresponding to the location information for the same position, and calculates the utilization result for this position, based on the group of the measurement information.

Here, the measurement history information illustrated in FIG. 5 is used as an example to describe an example of generating utilization result information. In FIG. 5, assuming that the respective pieces of the location information #1, #2, #3, ..., #n indicate the same location, the utilization result calculator 232 calculates a speed of waste amount increasing from the measurement information #1 to the measurement information #2 using an expression below.

$$\{(\text{measurement information \#2}) - (\text{measurement information \#1})\}/\{(\text{time-point information \#2}) - (\text{time-point information \#1})\}$$

The utilization result calculator 232 calculates the speed of waste amount increasing for the measurement information #2 to the measurement information #3 using an expression below.

$$\{(\text{measurement information \#3}) - (\text{measurement information \#2})\}/\{(\text{time-point information \#3}) - (\text{time-point information \#2})\}$$

The utilization result calculator 232 repeats such processing up to the measurement information #n. However, when a waste amount indicated by the m-th piece of measurement information decreases relative to a waste amount indicated by the (m - 1)-th piece of measurement information, the waste may be considered to have been collected by a trash collector to not calculate the speed of waste amount increasing from the (m - 1)-th to m-th. However, "m" represents an integer of "n" or less.

The utilization result calculator 232 calculates an average of the calculated speeds of waste amount increasing to use the calculated average as the utilization result information.

The reference information generator 233 generates reference information that includes the utilization result information calculated by the utilization result calculator 232 and is referenced to generate the suggestion information. FIG. 6 is a diagram illustrating a configuration example of the reference information.

As illustrated in FIG. 6, the reference information includes at least the location information and the utilization result information. In other words, the reference information is information indicating at which location and to what extent the resource recovery apparatus 100 has been utilized. The reference information may further include the apparatus identifier of the resource recovery apparatus 100. The reference information may further include the garbage sorting type information.

Here, the garbage sorting type information may be information indicating the garbage sorting type configured in advance for the resource recovery apparatus 100, for example, the garbage sorting type information included in the measurement information message received from the resource recovery apparatus 100. When the measurement information included in the measurement information message received from the resource recovery apparatus 100 includes the product identifier, the reference information generator 233 may generate the garbage sorting type information based on the product identifier. For example, association information associating the product identifier with the garbage sorting type is stored in the storage 220 in advance, and the reference information generator 233 uses the association information to generate the garbage sorting type information from the product identifier.

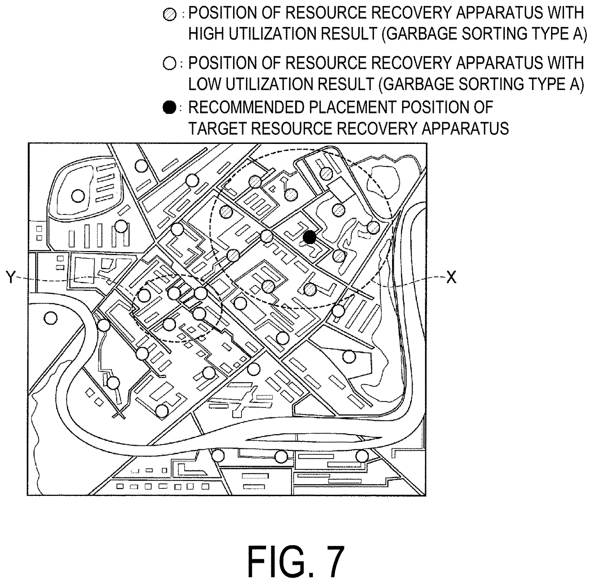

The region specifier 234 determines a geographical region (region X) where the utilization result of the resource recovery apparatus 100 is high, based on the reference information. FIG. 7 is a diagram illustrating an example of a method of specifying the region X.

As illustrated in FIG. 7, the region specifier 234 lays out the utilization result of the resource recovery apparatus 100 per location on a map, based on the reference information generated by the reference information generator 233 and map information. In FIG. 7, a location where the utilization result of the resource recovery apparatus 100 exceeds a threshold is illustrated by a hatched circle, and a location where the utilization result of the resource recovery apparatus 100 does not exceed the threshold is illustrated by a white circle. The region specifier 234 specifies, as the region X, a region where the hatched circles concentrate, in other words, a region where a density of the hatched circle is high.

The suggestion information generator 235 generates the suggestion information including information suggesting a location in the specified region X as the location of the target resource recovery apparatus. In the example illustrated in FIG. 7, the suggestion information generator 235 determines, as a recommended location, a location in the region X not overlapping the location of the resource recovery apparatus 100 that has been located , and includes information indicating the determined recommended location in the suggestion information. In FIG. 7, the recommended location is illustrated by a black circle.

The suggestion information generator 235 may include, in the suggestion information, the information suggesting changing the location of the resource recovery apparatus 100 having been placed outside the region X to a location inside the region X. For example, the suggestion information generator 235 determines one or more resource recovery apparatuses 100 that has been located in a region Y where the density of the white circle is high as the resource recovery apparatus(es) 100 recommended to be moved to the recommended location, and includes the apparatus identifier of the determined resource recovery apparatus 100 in the suggestion information.

Note that although in the example described above, the region specifier 234 specifies the region X depending on whether the utilization result of the resource recovery apparatus 100 exceeds one threshold, the utilization result of the resource recovery apparatus 100 may be compared with a plurality of thresholds. For example, the region specifier 234 may specify a region X' where the utilization result of the resource recovery apparatus 100 is very high as well as the region X where the utilization result of the resource recovery apparatus 100 is high. The region X' may be a partial region in the region X. In such a case, the suggestion information generator 235 may include, in the suggestion information, the information suggesting placing the resource recovery apparatus 100 having a high storage capacity as a target resource recovery apparatus placed in the region X'.

The location and a range of the region X (and the region X') described above may be different depending on the garbage sorting type configured for the resource recovery apparatus 100. For this reason, it is preferable that the region specifier 234 specifies the region X (and the region X') per garbage sorting type, and the suggestion information generator 235 generates the suggestion information per garbage sorting type.

The suggestion information transmitter 236 transmits the suggestion information generated by the suggestion information generator 235 to the communication apparatus 300 via the communicator 210. The suggestion information transmitter 236 may transmit the suggestion information to the communication apparatus 300 in response to a request from the communication apparatus 300.

Exemplary Operation of Resource Recovery System

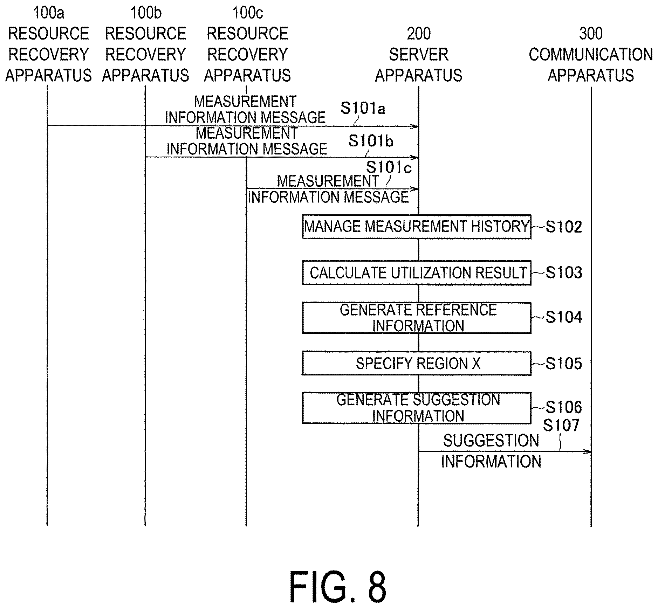

An exemplary operation of the resource recovery system 1 will be described. FIG. 8 is a diagram illustrating an exemplary operation of the resource recovery system 1.

As illustrated in FIG. 8, in steps S101a to S101c, the resource recovery apparatuses 100a to 100c transmit the measurement information messages as illustrated in FIG. 3 to the server apparatus 200. Operations in steps S101a to S101c are repeated plural times. For example, the resource recovery apparatuses 100a to 100c periodically transmit the measurement information messages to the server apparatus 200.

In step S102, the measurement history manager 231 in the server apparatus 200 manages the measurement history information for each resource recovery apparatus 100, based on the measurement information message received from each of the resource recovery apparatuses 100a to 100c.

In step S103, the utilization result calculator 232 in the server apparatus 200 calculates the waste amount per unit time of the resource recovery apparatus 100 at each location as the utilization result, based on the measurement history information.

In step S104, the reference information generator 233 in the server apparatus 200 generates the reference information that includes the utilization result information calculated by the utilization result calculator 232 and indicates at which location and to what extent the resource recovery apparatus 100 has been utilized.

In step S105, the region specifier 234 in the server apparatus 200 specifies the geographical region (region X) where the utilization result of the resource recovery apparatus 100 is high, based on the reference information.

In step S106, the suggestion information generator 235 in the server apparatus 200 generates the suggestion information including information suggesting the location in the specified region X as the location of the target resource recovery apparatus.

In step S107, the suggestion information transmitter 236 in the server apparatus 200 transmits the generated suggestion information to the communication apparatus 300.

As described above, in the resource recovery system 1 according to the first embodiment, the location of each resource recovery apparatus 100 can be appropriately determined by generating the suggestion information including the information indicating the suggestion for the location of the target resource recovery apparatus, based on the utilization result and the location of each of the plurality of resource recovery apparatuses 100.

Variation of First Embodiment

The first embodiment described above describes one example in which the suggestion information is generated based on the past utilization result of the resource recovery apparatus 100. However, the suggestion information may be generated in further consideration of an event to be held in the future.

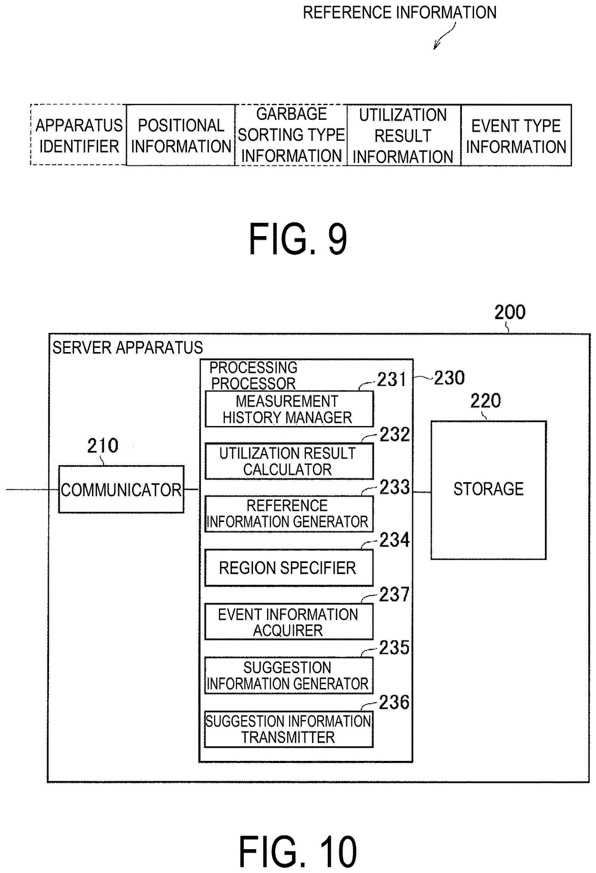

In the present variation, when the resource recovery apparatus 100 is placed inside or around an event-holding area, the reference information generator 233 manages the reference information (the utilization result information) corresponding to the resource recovery apparatus 100 in association with an event type (event type information) as illustrated in FIG. 9. As such, the reference information is information indicating in what type of event, at which location, and to what extent the resource recovery apparatus 100 has been utilized.

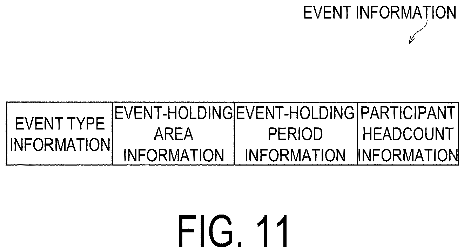

FIG. 10 is a diagram illustrating a configuration of the server apparatus 200 according to the present variation. As illustrated in FIG. 10, in the present variation, the server apparatus 200 further includes an event information acquirer 237 acquiring event information on an event that is to be held in the future. The event information acquirer 237 may acquire the event information from another server apparatus via the communicator 210. FIG. 11 is a diagram illustrating a configuration example of the event information.

As illustrated in FIG. 11, the event information includes event type information, event-holding area information, event-holding period information, and participant headcount information.

The event type information is information indicating an event type. The event type includes, for example, 1) exposition/exhibition (convention), 2) sports event, 3) lecture presentation/symposium, 4) music even/concert, 5) exhibition and sale/product sales event/flea market, and 6) ceremony/pageantry, and the event type may be also subdivided.

The event-holding area information is information indicating an event-holding area where an event will be held. The event-holding area refers to a geographical region corresponding to an event venue.

The event-holding period information is information indicating a future period during which an event will be held.

The participant headcount information is information indicating the number of consumers participating in an event (in other words, event participants). The number of event participants may be the number of people corresponding to the number of purchased tickets, or the expected number of people defined depending on the capacity of the event venue or the like.

In the present variation, the suggestion information generator 235 generates the suggestion information further based on the event information on an event to be held in the future.

For example, the suggestion information generator 235 generates the suggestion information, based on the utilization result (the reference information) corresponding to an event type that matches the event type indicated by the event type information included in the event information (in other words, the event type of the event to be held in the future).

Specifically, the suggestion information generator 235 extracts, from the reference information generated by the reference information generator 233, the reference information of which the event type matches the event type of the event to be held in the future, and generates the suggestion information using the extracted reference information. This makes it possible to generate the suggestion information using the utilization result (the reference information) of events held in the past whose event types match those of events to be held in the future.

The suggestion information generator 235 may generate the suggestion information including information indicating a suggestion for the location of the target resource recovery apparatus inside the event-holding area where the event will be held, based on the event-holding area information. The event-holding area is an area where the resource recovery apparatus 100 is expected to be highly demanded, so generating the suggestion information targeting the event-holding area is beneficial.

The suggestion information generator 235 may generate the suggestion information including information indicating a suggestion for the location of the target resource recovery apparatus during a future period during which the event is to be held (an event-holding period), based on the event-holding period information. The event-holding period is a period during which the resource recovery apparatus 100 is expected to be highly demanded, so generating the suggestion information targeting the event-holding period is beneficial.

The suggestion information generator 235 may generate, based on the participant headcount information and/or the event type information, the suggestion information further including placement count information suggesting the number of target resource recovery apparatuses and/or type information suggesting a type of an article (garbage sorting type) to be recovered by the target resource recovery apparatus. For example, the suggestion information generator 235 may generate the suggestion information suggesting that the larger the number of event participants, the larger the number of target resource recovery apparatuses. The suggestion information generator 235 may determine a recommended garbage sorting type configured for the target resource recovery apparatus, depending on whether the event type is an event serving food and drink, and what food and drink are served.

The suggestion information generator 235 may generate the suggestion information also in consideration of weather information in addition to the event information. The weather information is information obtained by predicting a future weather. The suggestion information generator 235 may acquire the weather information from another server apparatus via the communicator 210. The suggestion information generator 235 generates the suggestion information, based on the weather information on predicted weather during the event-holding period in which the event is to be held. For example, when the weather during the event-holding period is rainy, the suggestion information generator 235 may generate the suggestion information with the number of target resource recovery apparatuses decreased compared to when the weather during the event-holding period is sunny. Here, the suggestion information generator 235 may further recognize whether the event type is an outdoor event or an indoor event. For example, when the event type is an outdoor event and the weather during the event-holding period is rainy, the suggestion information generator 235 may generate the suggestion information with the number of target resource recovery apparatuses decreased compared to when the weather during the event-holding period is sunny.

Overview of Second Embodiment

When an event is held, for example, a large amount of wastes may be generated at a venue or in a surrounding urban area, and the resource recovery apparatus is likely to be full. This causes a problem in that consumers cannot discard their waste in the resource recovery apparatus the consumers have reached on a congested road, and end up discarding their waste on the road. When the usage frequency varies between a plurality of resource recovery apparatuses, the amount of waste discarded in the resource recovery apparatuses may be disproportionate.

In the resource recovery system according to the second embodiment, the resource recovery apparatus transmits the measurement information specifying a remaining capacity of the resource recovery apparatus to the server apparatus, and the server apparatus notifies the consumer of information indicating a location of the resource recovery apparatus having a predetermined remaining capacity such that the consumer can discard a waste in an appropriate resource recovery apparatus, which can solve the problems as described above.

Second Embodiment

The second embodiment will be described focusing on differences from the first embodiment, and the description of similar or identical components is omitted.

Configuration Example of Resource Recovery System

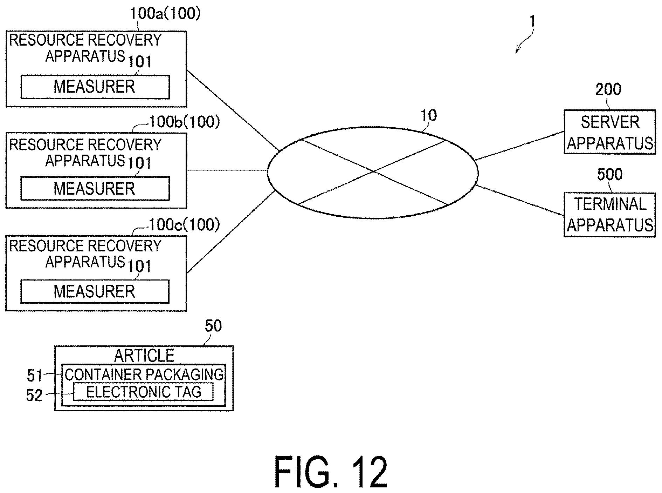

First, a configuration example of a resource recovery system according to the second embodiment will be described. The resource recovery system is a system for recovering articles to be recycled as a resource. Here, the articles may be any article so long as it can be recycled as a resource, and, for example, includes a product and/or a container packaging of the product. FIG. 12 is a diagram illustrating a configuration of a resource recovery system 1 according to the second embodiment. Note that the description will be given focusing on differences from the resource recovery system according to the first embodiment, and the description of similar or identical components is omitted.

As illustrated in FIG. 12, in the second embodiment, the resource recovery system 1 includes a plurality of resource recovery apparatuses 100a, 100b, and 100c, a server apparatus 200, and a terminal apparatus 500. The resource recovery apparatuses 100a, 100b, and 100c are hereinafter simply referred to as the resource recovery apparatus(es) 100 unless otherwise distinguished.

In the second embodiment, the resource recovery apparatus 100, the server apparatus 200, and the terminal apparatus 500 are connected to a network 10. The network 10 includes at least one selected from the group consisting of a Local Area Network (LAN), a Wide Area Network (WAN), and the Internet.

An article 50 may be a product, for example, a food or a drink. Hereinafter, an example in which the article 50 is a product will be described. The article 50 includes a container packaging 51. In the second embodiment, the container packaging 51 includes an electronic tag 52. The electronic tag 52 may be included in a product body except for the container packaging 51. At least a product identifier identifying the article 50 is written in the electronic tag 52. The product identifier is assumed to be an individual identifier of the article 50, but the product identifier may be a product name of the article 50, or may be a set of an individual identifier and a product name.

The electronic tag 52 is a passive, active, or semi-active electronic tag 52. In the following example, a passive electronic tag 52 is mainly used. The passive electronic tag 52 can generate electricity by receiving a radio wave and generate drive power, and thus, needs no battery.

The resource recovery apparatus 100 is an apparatus that recovers a waste that is discarded articles by a consumer. The waste is, for example, the container packaging 51 of the article 50. The resource recovery apparatus 100 is a trash bin having a communication function, and may be referred to as a smart trash bin. The resource recovery apparatus 100 may be provided indoors (for example, inside a house of the consumer or inside a shop), or outdoors (around a shop or on a road).

The resource recovery apparatus 100 may be a trash bin that is moved by a worker and temporarily placed at an event venue or the like. The resource recovery apparatus 100 may be a self-propelled trash bin operated by remote control.

The resource recovery apparatus 100 may be an apparatus attached to an existing trash bin, or an apparatus configuring a part of the trash bin. Types of wastes to be recovered (that is garbage sorting types) may be configured for the resource recovery apparatus 100.

The resource recovery apparatus 100 includes a measurer 101. The measurer 101 performs measurement regarding the waste and transmits a measurement information message including the measurement information specifying the remaining capacity in the resource recovery apparatus 100 to the server apparatus 200. The measurement information message is an example of a first message.

The measurement information may be any information that specifies the remaining capacity of the resource recovery apparatus 100. For example, the measurement information corresponds to information indicating the waste amount that is an amount of wastes accumulated by the resource recovery apparatus 100, or information indicating the remaining capacity itself of the resource recovery apparatus 100. Here, the waste amount may be at least one selected from the group consisting of a weight of the wastes accumulated in the resource recovery apparatus 100, the number of times a waste is put into the resource recovery apparatus 100, and a time period of putting a waste into the resource recovery apparatus 100. The measurement information may include information indicating the number of times an opening/closing 110 provided to the resource recovery apparatus 100 is opened (the number of times a waste is put into) (see FIG. 2) and/or information indicating a length of a time period when the opening/closing 110 is open (the time period when a waste is put into).

The server apparatus 200 is an apparatus managing the plurality of resource recovery apparatuses 100. The server apparatus 200 communicates with the resource recovery apparatuses 100 and the terminal apparatus 500 via the network 10.

The server apparatus 200 specifies a location of each resource recovery apparatus 100. The location of each resource recovery apparatus 100 may be registered in the server apparatus 200 in advance. In this case, the server apparatus 200 references information of the registered location to specify the location of each resource recovery apparatus 100.

The server apparatus 200 may receive the location information from each resource recovery apparatus 100 to specify the location of each resource recovery apparatus 100. For example, the resource recovery apparatus 100 has a positioning function, generates location information indicating a location of the resource recovery apparatus 100 itself by the positioning function, and transmits a measurement information message including the generated location information to the server apparatus 200. As a result, the server apparatus 200 can specify the location of each resource recovery apparatus 100 even when the resource recovery apparatus 100 moves.

The terminal apparatus 500 is an apparatus owned by a consumer. In the second embodiment, the terminal apparatus 500 is a mobile terminal moving with the consumer. The terminal apparatus 500 is, for example, a smartphone, a tablet terminal, a notebook PC, or a wearable terminal. The terminal apparatus 500 transmits a location information message including location information indicating a location of the terminal apparatus 500 itself to the server apparatus 200. The location information message is an example of a third message.

The server apparatus 200 executes notification processing to notify consumer of information indicating a location of the resource recovery apparatus 100 having a predetermined remaining capacity, based on the measurement information message received from each resource recovery apparatus 100 and the location information message received from the terminal apparatus 500. In the second embodiment, the notification processing includes processing to transmit, to the terminal apparatus 500, a guide information message including the information indicating the location of the resource recovery apparatus (hereinafter, accordingly referred to as a "recommended recovery apparatus") 100 having the predetermined remaining capacity. The guide information message is an example of a second message.

The terminal apparatus 500 notifies the consumer of the location of the recommended recovery apparatus, based on the guide information message received from the server apparatus 200. As a result, the consumer can grasp the location of the recommended recovery apparatus and discard the waste in the recommended recovery apparatus.

Configuration Example of Resource Recovery Apparatus

A configuration example of the resource recovery apparatus 100 will be described. The drawing illustrating the configuration example of the resource recovery apparatus 100 according to the second embodiment is same as and/or similar to the drawing illustrating the configuration example of the resource recovery apparatus 100 according to the first embodiment. Thus, in the following description, the configuration example of the resource recovery apparatus 100 according to the second embodiment will be described with reference to FIG. 2. Note that the description will be given focusing on differences from the configuration example of the resource recovery apparatus 100 according to the first embodiment, and the description of similar or identical components is omitted.

In the second embodiment, the positioner 150 may perform, in addition to or instead of satellite positioning, base station positioning using radio signals received from a cellular base station or a wireless LAN access point. The positioner 150 may be at least partially integrated with the communicator 140.

In the second embodiment, transmission of the measurement information message may be made every time the consumer specifier 120 newly specifies a consumer. The transmission of the measurement information message may be made every time the waste specifier 130 newly specifies a waste.

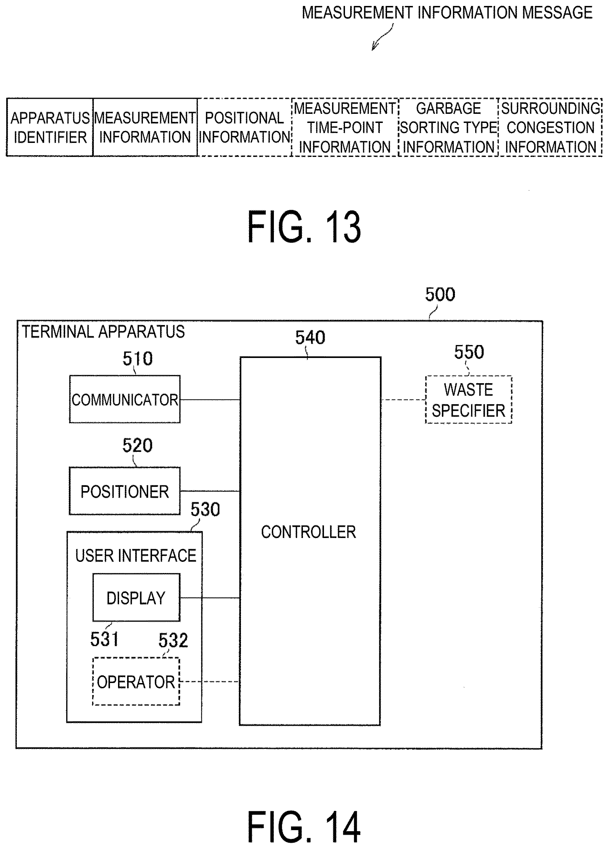

FIG. 13 is a diagram illustrating a configuration example of a measurement information message according to the second embodiment.

As illustrated in FIG. 13, the measurement information message according to the second embodiment includes the apparatus identifier of the resource recovery apparatus 100 transmitting the measurement information message, and the measurement information output by the measurer 101. The measurement information message may further include the location information output by the positioner 150. The measurement information message may further include the measurement time-point information indicating a time point at which the measurer 101 performs measurement. The measurement information message may include a plurality of sets of the measurement information, the location information, and the measurement time-point information. When the garbage sorting type is configured for the resource recovery apparatus 100, the measurement information message may further include garbage sorting type information indicating the garbage sorting type.

The measurement information message may further include surrounding congestion information indicating the level of congestion in the vicinity of the resource recovery apparatus 100. For example, the controller 170 may generate information indicating the number of times the consumer specifier 120 newly specifies a consumer per unit time as the surrounding congestion information. The controller 170 may generate information indicating the number of times the waste specifier 130 newly specifies a waste per unit time as the surrounding congestion information.

When the measurement information is not changed since the last measurement information message has been transmitted, the controller 170 may include information that the measurement information is not changed as the measurement information in the current measurement information message, or may omit the transmission of the current measurement information message or the transmission of the current measurement information. When the location information is not changed since the last measurement information message has been transmitted, the controller 170 may include information that the location information is not changed as the location information in the current measurement information message, or may omit the transmission of the current location information.

Configuration Example of Terminal Apparatus

A configuration example of the terminal apparatus 500 will be described. FIG. 14 is a diagram illustrating the configuration example of the terminal apparatus 500. In FIG. 14, dashed lines illustrate components that are optional.

As illustrated in FIG. 14, the terminal apparatus 500 includes a communicator 510, a positioner 520, a user interface 530, and a controller 540. The terminal apparatus 500 may further include a power supply (not illustrated).

The communicator 510 includes a communication interface connected to the network 10 in a wired or wireless manner. The communicator 510 communicates with the server apparatus 200 via the network 10.

The positioner 520 generates location information indicating a location of the terminal apparatus 500 through positioning by use of a positioning satellite, and outputs the generated location information to the controller 540. The positioner 520 includes a GNSS receiver. The positioner 520 may perform, in addition to or instead of the satellite positioning, base station positioning using a radio signal received from a cellular base station or a wireless LAN access point. The positioner 520 may be at least partially integrated with the communicator 510.

The user interface 530 is an interface for making notification to a consumer (user). The user interface 530 includes a display 531 that displays information under control of the controller 540. The display 531 includes, for example, a liquid crystal display, an organic EL display. The user interface 530 may include, in addition to or instead of the display 531, an audio output (speaker) that outputs audio under control of the controller 540. The user interface 530 may further include an operator 532 accepting an operation input from the consumer. For example, the operator 532 is a touch panel, a keypad, and the like. The operator 532 outputs information indicating contents of the accepted operation to the controller 540. The operator 532 may be integrated with the display 531 to configure a touch panel display.

The controller 540 controls each component in the terminal apparatus 500. The controller 540 includes at least one processor and at least one memory electrically connected to the processor.

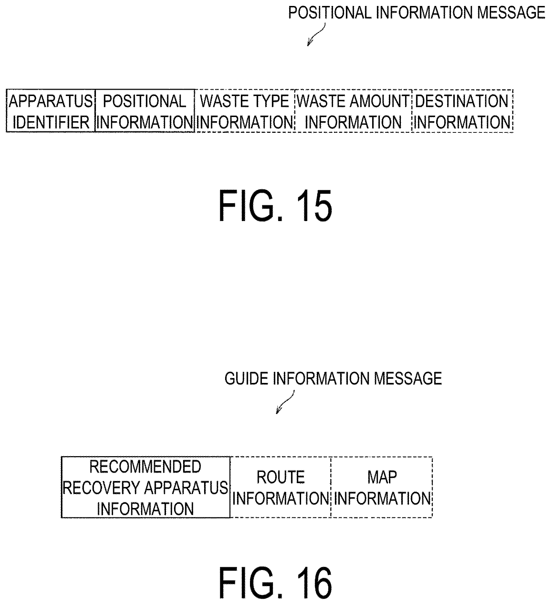

First, the controller 540 generates a location information message including the location information output by the positioner 520, and transmits the location information message via the communicator 510 to the server apparatus 200. The location information message may include information other than the location information, for example, an apparatus identifier that identifies the terminal apparatus 500. FIG. 15 is a diagram illustrating a configuration example of the location information message.

As illustrated in FIG. 15, the location information message includes the apparatus identifier of the terminal apparatus 500 that transmits the location information message and the location information output by the positioner 520.

The location information message may further include waste type information indicating a garbage sorting type of a not yet discarded article carried by a consumer and/or waste amount information indicating an amount of not yet discarded article carried by a consumer (hereinafter, accordingly referred to as "waste-related information"). The waste-related information may be information generated by the controller 540 based on the information output by the operator 532. Specifically, the waste-related information may be information manually input by the consumer to the terminal apparatus 500. The terminal apparatus 500 may include a waste specifier 550 automatically generating the waste-related information. For example, the waste specifier 550 is configured in a manner same as and/or similar to the waste specifier 130 described above.

The location information message may further include destination information indicating a final destination of a consumer. The final destination is a destination other than the location of the resource recovery apparatus 100 and information indicating where the consumer ultimately wants to go. For example, an event venue, a home of the consumer, or the like corresponds to the final destination. The destination information may be information generated by the controller 540 based on the information output by the operator 532. Specifically, the waste-related information may be information manually input by the consumer to the terminal apparatus 500.

Secondly, once the communicator 510 receives the guide information message from the server apparatus 200, the controller 540 controls the user interface 530 such that the user interface 530 notifies the consumer of the information included in the guide information message. The guide information message includes information indicating the location of the recommended recovery apparatus. The guide information message may include also information other than the information indicating the location of the recommended recovery apparatus. FIG. 16 is a diagram illustrating a configuration example of the guide information message.

As illustrated in FIG. 16, the guide information message includes recommended recovery apparatus information including the location information of the recommended recovery apparatus. The location information is, for example, latitude/longitude information, and may include altitude information. The recommended recovery apparatus information may include, in addition to the location information of the recommended recovery apparatus, garbage sorting type information indicating a garbage sorting type configured for the recommended recovery apparatus and/or an apparatus identifier of the recommended recovery apparatus.

The guide information message may further include route information indicating a route from the terminal apparatus 500 to the recommended recovery apparatus. The route is a route determined by the server apparatus 200.

The guide information message may further include map information of a geographical region including a location of the terminal apparatus 500. The controller 540 may store the map information in the memory in advance, or may acquire map information from an external server other than the server apparatus 200 via the communicator 510.

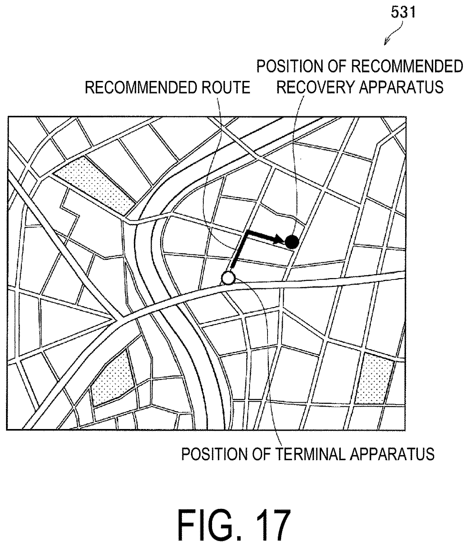

The controller 540 controls the user interface 530 such that the user interface 530 notifies a consumer of the information included in the guide information message. The controller 540 controls the user interface 530 such that the user interface 530 also notifies the consumer of location information of the terminal apparatus 500 output by the positioner 520. For example, the controller 540 displays the information included in the guide information message on the display 531. FIG. 17 is a diagram illustrating a screen display example on the display 531.

In the example illustrated in FIG. 17, the display 531 displays a mark indicating the location of the recommended recovery apparatus on a map. The display 531 may further display a line (and an arrow) indicating the route to the recommended recovery apparatus on the map. The display 531 may further display a mark indicating the location of the terminal apparatus 500 on the map. Such a screen display allows the consumer to grasp the location of the resource recovery apparatus 100 where the consumer can discard a waste so that the consumer can discard the waste in an appropriate resource recovery apparatus.

Configuration Example of Server Apparatus

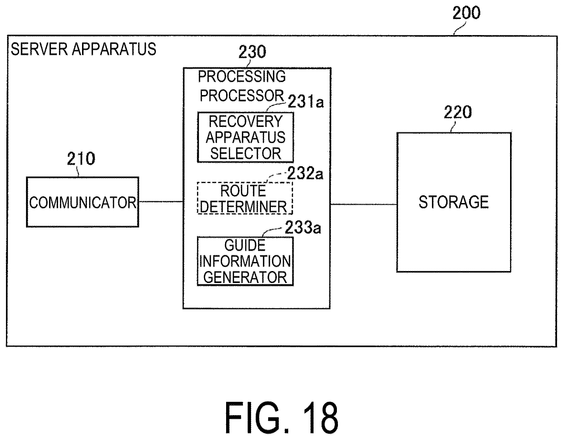

A configuration example of the server apparatus 200 will be described. FIG. 18 is a diagram illustrating a configuration example of the server apparatus 200. In FIG. 18, dashed lines illustrate a component that is optional. Note that the description will be given focusing on differences from the server apparatus according to the first embodiment, and the description of similar or identical components is omitted.

As illustrated in FIG. 18, the server apparatus 200 includes a communicator 210, a storage 220, and a processing unit 230.

The communicator 210 includes a communication interface connected to the network 10 in a wired or wireless manner. The communicator 210 communicates with the respective resource recovery apparatuses 100 and the terminal apparatus 500 via the network 10. The communicator 210 receives the measurement information message from each resource recovery apparatus 100. The communicator 210 receives the location information message from the terminal apparatus 500. The communicator 210 transmits guide information message to the terminal apparatus 500.

The storage 220 stores various types of information used for information processing executed by the processing unit 230. The storage 220 includes a Hard Disk Drive (HDD) or an auxiliary storage device such as a Solid State Drive (SSD). The processing unit 230 stores the information to the storage 220, or updates the information stored in the storage 220.

The processing unit 230 executes various types of information processing, based on the information received by the communicator 210 and the information stored in the storage 220. The processing unit 230 includes at least one processor and at least one memory electrically connected to the processor. The processor executes a program stored in the memory to perform a function of each of a recovery apparatus selector 231a and a guide information generator 233a. The processor may further perform a function of a route determiner 232a.

The recovery apparatus selector 231a selects the recommended recovery apparatus from among the plurality of resource recovery apparatuses 100, based on the measurement information message that the communicator 210 receives from each resource recovery apparatus 100 and/or the location information message that the communicator 210 receives from the terminal apparatus 500. A selection criterion for selecting a recommended recovery apparatus includes at least one selected from the group consisting of selection criteria (1) to (7) below.

The recovery apparatus selector 231a may select the recommended recovery apparatus based on only any one of the selection criteria. The recovery apparatus selector 231a may obtain a sum of selection priorities (or weights) given by two or more selection criteria to select the resource recovery apparatus 100 having the greatest sum of the weights as the recommended recovery apparatus.

Hereinafter, an example is described in which the recovery apparatus selector 231a selects only one recommended recovery apparatus, but the recovery apparatus selector 231a may select a plurality of recommended recovery apparatuses. For example, a predetermined number of (for example, two) resource recovery apparatuses 100 may be selected as the recommended recovery apparatuses in order of the sum of the above weights being larger.

Selection criterion (1): Latest remaining capacity of each resource recovery apparatus 100

The recovery apparatus selector 231a grasps the latest remaining capacity of each resource recovery apparatus 100, based on the measurement information included in the measurement information message received from each resource recovery apparatus 100, and increases the priority of selecting as the recommended recovery apparatus when the latest remaining capacity of the resource recovery apparatus 100 is large. The recovery apparatus selector 231a may select the resource recovery apparatus 100 having the largest latest remaining capacity as the recommended recovery apparatus.

Selection criterion (2): Future remaining capacity of each resource recovery apparatus 100

The recovery apparatus selector 231a grasps the usage frequency of each resource recovery apparatus 100, based on the measurement information included in the measurement information message received from each resource recovery apparatus 100. The usage frequency refers to how frequently the resource recovery apparatus 100 is utilized, and a waste amount per unit time can be used as a usage frequency, for example. The term "grasp" includes both "specify" and "estimate".

The recovery apparatus selector 231a acquires, via the communicator 210, information on a collection state from a terminal or server of a trash collector that is a business operator collecting the wastes accumulated in the resource recovery apparatus 100. The collection state refers to when the waste is collected from which resource recovery apparatus 100, and collection schedule information of the trash collector can be used as the collection state.

The recovery apparatus selector 231a predicts a future remaining capacity of each resource recovery apparatus 100, based on the usage frequency and the collection state of the trash collector of each resource recovery apparatus 100. For example, the recovery apparatus selector 231a predicts the remaining capacity in each resource recovery apparatus 100 after a lapse of a predetermined time. The recovery apparatus selector 231a may configure the prescribed time for each resource recovery apparatus 100 depending on a distance between the location of the terminal apparatus 500 and each resource recovery apparatus 100.

The recovery apparatus selector 231a increases the priority of selecting, as the recommended recovery apparatus, the resource recovery apparatus 100 having a larger predicted future remaining capacity. The recovery apparatus selector 231a may select the resource recovery apparatus 100 having the largest predicted future remaining capacity, as the recommended recovery apparatus.

Selection criterion (3): Garbage sorting type of waste carried by consumer

The recovery apparatus selector 231a grasps the garbage sorting type of the waste (not yet discarded articles) carried by the consumer, based on the waste type information included in the location information message received from the terminal apparatus 500. The recovery apparatus selector 231a grasps the garbage sorting type configured for each resource recovery apparatus 100, based on the garbage sorting type information included in the measurement information message received from each resource recovery apparatus 100 or registered information stored in the storage 220 in advance.

The recovery apparatus selector 231a selects the recommended recovery apparatus from among the plurality of resource recovery apparatuses 100, based on the garbage sorting type of the waste carried by the consumer and the garbage sorting type of each resource recovery apparatus 100. The recovery apparatus selector 231a increases the priority of selecting, as the recommended recovery apparatus, the resource recovery apparatus 100 configured with the garbage sorting type matching the garbage sorting type of the waste carried by the consumer. The recovery apparatus selector 231a may select, as the recommended recovery apparatus, the resource recovery apparatus 100 configured with the garbage sorting type matching the garbage sorting type of the waste carried by the consumer.

Selection criterion (4): Amount of waste carried by consumer

The recovery apparatus selector 231a grasps the amount of the waste carried by the consumer (not yet discarded articles), based on the waste amount information included in the location information message received from the terminal apparatus 500. The recovery apparatus selector 231a grasps the remaining capacity of each resource recovery apparatus 100 in a manner same as and/or similar to the selection criterion (1) or (2) described above.

The recovery apparatus selector 231a increases the priority of selecting, as the recommended recovery apparatus, the resource recovery apparatus 100 having a remaining capacity larger than or equal to the amount of the waste carried by the consumer. The recovery apparatus selector 231a may select the resource recovery apparatus 100 including a remaining capacity larger than or equal to the amount of the waste carried by the consumer as the recommended recovery apparatus.

Selection criterion (5): Congestion level around each resource recovery apparatus 100

The recovery apparatus selector 231a grasps the level of congestion in the vicinity of each resource recovery apparatus 100, based on the surrounding congestion information included in the measurement information message received from each resource recovery apparatus 100. The level of congestion in the vicinity of the resource recovery apparatus 100 refers to the number of consumers who are trying to discard their waste in the resource recovery apparatus 100.

The recovery apparatus selector 231a increases the priority of selecting, as the recommended recovery apparatus, the resource recovery apparatus 100 with a low congestion level. The recovery apparatus selector 231a may select the resource recovery apparatus 100 with the lowest congestion level, as the recommended recovery apparatus.

Selection criterion (6): Ease of arriving at each resource recovery apparatus 100 The recovery apparatus selector 231a grasps the location of each resource recovery apparatus 100, based on the location information included in the measurement information message received from each resource recovery apparatus 100 or the registered information stored in the storage 220 in advance. The recovery apparatus selector 231a grasps the location of the terminal apparatus 500, based on the location information included in the location information message received from the terminal apparatus 500.

The recovery apparatus selector 231a determines the route for each resource recovery apparatus 100 (the route from the terminal apparatus 500 to each resource recovery apparatus 100), based on the location of each resource recovery apparatus 100 and the location of the terminal apparatus 500. The recovery apparatus selector 231a determines a route parameter including at least one selected from the group consisting of a distance, height difference, and congestion level in the determined route, based on the map information and the congestion information, to select the recommended recovery apparatus based on the route parameter.

Here, the map information may be information stored in the storage 220 in advance, or information acquired by the recovery apparatus selector 231a from an external server via the communicator 210. The congestion information is information indicating the congestion level on a road (including a passage), and may be information acquired by the recovery apparatus selector 231a from an external server via the communicator 210.

For example, the recovery apparatus selector 231a may increase the priority of selecting, as the recommended recovery apparatus, the resource recovery apparatus 100 with a shorter distance to the terminal apparatus 500. The recovery apparatus selector 231a may select, as the recommended recovery apparatus, the resource recovery apparatus 100 with the shortest distance to the terminal apparatus 500.

The recovery apparatus selector 231a may increase the priority of selecting, as the recommended recovery apparatus, the resource recovery apparatus 100 with a smaller height difference in the corresponding route. The recovery apparatus selector 231a may select, as the recommended recovery apparatus, the resource recovery apparatus 100 with the smallest height difference in the corresponding route.

The recovery apparatus selector 231a may increase the priority of selecting, as the recommended recovery apparatus, the resource recovery apparatus 100 with a low surrounding congestion level on the corresponding route. The recovery apparatus selector 231a may select, as the recommended recovery apparatus, the resource recovery apparatus 100 with the smallest congestion level on the corresponding route.

Selection criterion (7): Final destination of consumer

The recovery apparatus selector 231a grasps the location of each resource recovery apparatus 100, based on the location information included in the measurement information message received from each resource recovery apparatus 100 or the registered information stored in the storage 220 in advance. The recovery apparatus selector 231a grasps the final destination of the consumer, based on the destination information included in the location information message received from the terminal apparatus 500.

The recovery apparatus selector 231a selects the recommended recovery apparatus, based on the location of each resource recovery apparatus 100 and the final destination of the consumer. The recovery apparatus selector 231a may increase the priority of selecting, as the recommended recovery apparatus, the resource recovery apparatus 100 nearer to the final destination of the consumer. The recovery apparatus selector 231a may select, as the recommended recovery apparatus, the resource recovery apparatus 100 nearest to the final destination of the consumer.

The recovery apparatus selector 231a may grasp the location of the terminal apparatus 500, based on the location information included in the location information message received from the terminal apparatus 500 and select the recommended recovery apparatus also in consideration of the location of the terminal apparatus 500. The recovery apparatus selector 231a may increase the priority of selecting, as the recommended recovery apparatus, the resource recovery apparatus 100 nearer to a route between the terminal apparatus 500 and the final destination of the consumer. The recovery apparatus selector 231a may select, as the recommended recovery apparatus, the resource recovery apparatus 100 on the route between the terminal apparatus 500 and the final destination of the consumer.

After the recommended recovery apparatus is selected in this way, the route determiner 232a determines a route from the terminal apparatus 500 to the recommended recovery apparatus to generate the route information indicating the route. Here, the route determiner 232a determines the route, based on the map information, the location information of the terminal apparatus 500, and the location information of the recommended recovery apparatus. In a case that the recovery apparatus selector 231a selects a plurality of recommended recovery apparatuses, the route determiner 232a may generate the route information for each of the plurality of recommended recovery apparatuses. Note that the route determiner 232a may be at least partially integrated with the recovery apparatus selector 231a.

The guide information generator 233a generates the guide information message as illustrated in FIG. 16. The guide information message includes the location information of the recommended recovery apparatus. The guide information message may further include the route information generated by the route determiner 232a. The guide information message may further include information on a map displayed by the terminal apparatus 500. After the guide information message is generated in this way, the communicator 210 transmits the guide information message to the terminal apparatus 500.

Entire Operation Example of Resource Recovery System

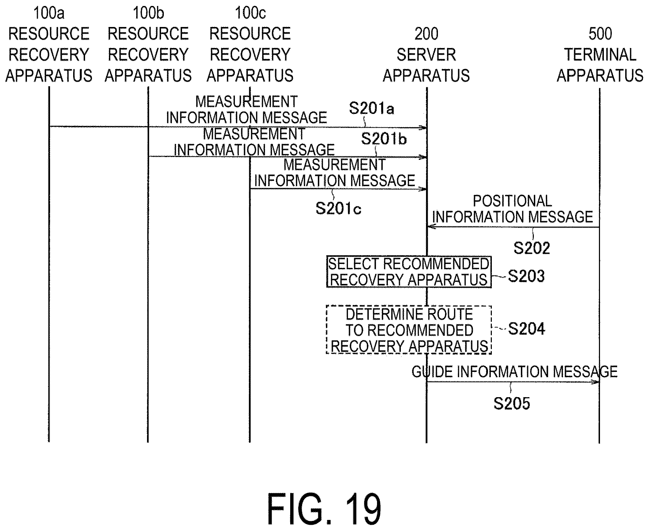

An entire operation example of the resource recovery system 1 will be described. FIG. 19 is a diagram illustrating the entire operation example of the resource recovery system 1.

As illustrated in FIG. 19, in steps S201a to S201c, the resource recovery apparatuses 100a to 100c transmit the measurement information messages as illustrated in FIG. 13 to the server apparatus 200.

In step S202, the terminal apparatus 500 transmits the location information messages as illustrated in FIG. 15 to the server apparatus 200. Step S202 may be performed before or simultaneously with steps S201a to S201c.

In step S203, the recovery apparatus selector 231a in the server apparatus 200 selects the recommended recovery apparatus from among the resource recovery apparatuses 100a to 100c, based the measurement information message received from each resource recovery apparatus 100 and/or the location information message received from the terminal apparatus 500.

In step S204, the route determiner 232a in the server apparatus 200 may generate the route information indicating the route from the terminal apparatus 500 to the recommended recovery apparatus.

In step S205, the communicator 210 in the server apparatus 200 transmits the guide information message as illustrated in FIG. 16 to the terminal apparatus 500.

In this way, in the resource recovery system 1 according to the second embodiment, each resource recovery apparatus 100 transmits the measurement information specifying the remaining capacity of the resource recovery apparatus 100 to the server apparatus 200, and the server apparatus 200 notifies the consumer of the information indicating the location of the resource recovery apparatus 100 having a predetermined remaining capacity (the recommended recovery apparatus) such that the consumer can discard the waste in the appropriate resource recovery apparatus 100.

Variation of Second Embodiment

A variation of the second embodiment will be described focusing on differences from the second embodiment described above.

In the present variation, the server apparatus 200 manages an incentive given to a consumer on using the resource recovery apparatus 100 or a usage fee charged to a consumer on using the resource recovery apparatus 100 in order to encourage the consumer to take a disposal action for correcting disproportion in the waste amount between the plurality of resource recovery apparatuses 100. Hereinafter, an example is described in which the server apparatus 200 manages information on the incentive, but the server apparatus 200 may manage information on the usage fee instead of the incentive.

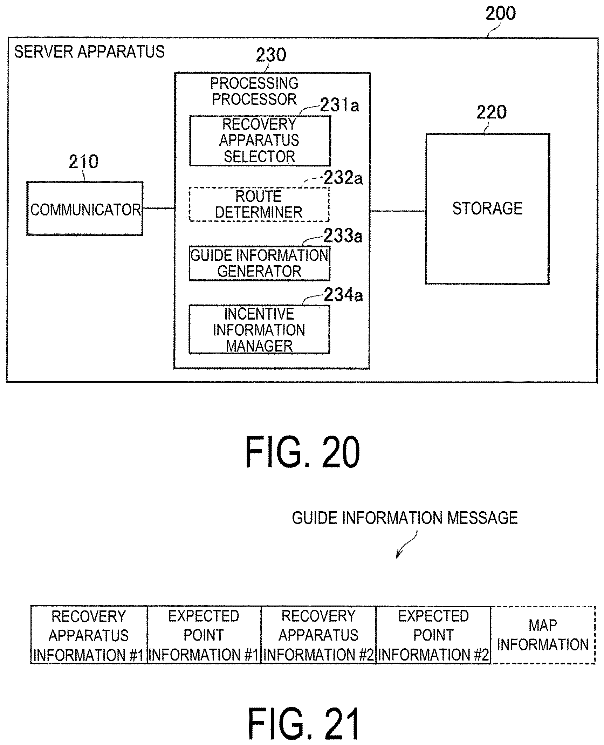

FIG. 20 is a diagram illustrating a configuration example of the server apparatus 200 according to the present variation. As illustrated in FIG. 20, the server apparatus 200 further includes an incentive information manager 234a. The incentive information manager 234a determines an incentive given upon use of each resource recovery apparatus 100. The incentive information manager 234a may determine an incentive for each recommended recovery apparatus selected by the recovery apparatus selector 231a.

The incentive may be, for example, a point usable in a shop or the like, or discount information usable in a shop or the like (so-called coupons). Hereinafter, an example in which the incentive is a point will be described. Examples of a conceivable usage of such a point include use in a purchase and use in exchange for a right to discard a waste in an outside-shop resource recovery apparatus other than the resource recovery apparatuses 100 placed in chain stores. The chain shops can also suppress discarded trash outside the shops.

First, the incentive information manager 234a determines, based on the remaining capacity in each resource recovery apparatus 100 and/or the usage frequency of each resource recovery apparatus 100, a point to be given to the consumer on using the resource recovery apparatus 100.

For example, the incentive information manager 234a may determine to give more points for the resource recovery apparatus 100 having a larger remaining capacity. On the other hand, the incentive information manager 234a may determine to give less points for the resource recovery apparatus 100 having a smaller remaining capacity.

The incentive information manager 234a may determine to give more points for the resource recovery apparatus 100 with a low usage frequency. On the other hand, the incentive information manager 234a may determine to give less points for the resource recovery apparatus 100 with a high usage frequency.

Here, the point determined for each resource recovery apparatus 100 by the incentive information manager 234a may be a point coefficient. In this case, the incentive information manager 234a may calculate the point to be given to the consumer using "waste amount x point coefficient". The waste amount may be the number of times of discarding, a size of a waste (volume), or a weight of the waste.

Secondly, the incentive information manager 234a may include expected point information indicating the determined point in the guide information message. FIG. 21 is a diagram illustrating a configuration example of the guide information message according to the present variation.

As illustrated in FIG. 21, in the present variation, the guide information message includes the expected point information for each piece of information of the recommended recovery apparatus (the recovery apparatus information). The expected point information may be a point coefficient.

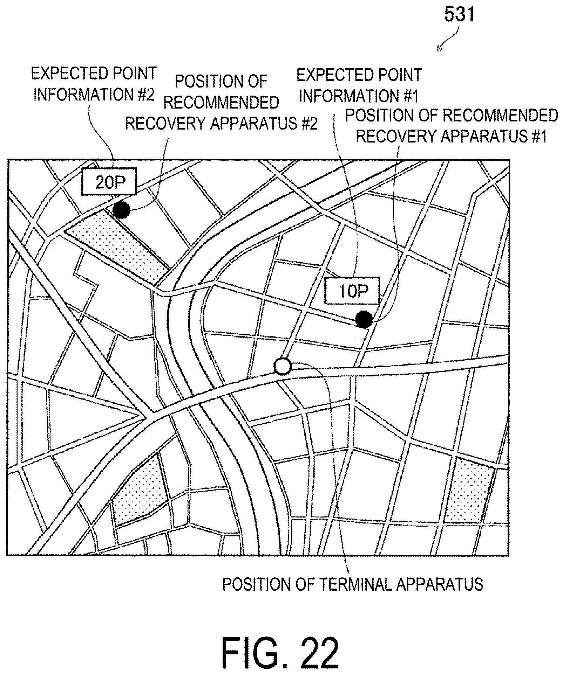

The terminal apparatus 500 notifies the consumer of the expected point information, based on such a guide information message. For example, the controller 540 in the terminal apparatus 500 also displays the expected point information included in the guide information message on the display 531. FIG. 22 is a diagram illustrating a screen display example on the display 531 according to the present variation.

In the example illustrated in FIG. 22, the display 531 displays the expected point information in association with the mark indicating the location of the recommended recovery apparatus. This allows the consumer to grasp the point to be given in using each recommended recovery apparatus to encourage the consumer to take a disposal action for correcting disproportion in the waste amount between the plurality of resource recovery apparatuses 100.

Thirdly, the incentive information manager 234a determines that the consumer discards a waste in any of the recommended recovery apparatus. The incentive information manager 234a may detect that a location of the consumer comes close to any recommended recovery apparatus, based on the location information message periodically received from the terminal apparatus 500 to determine that the consumer discards a waste in the recommended recovery apparatuses.

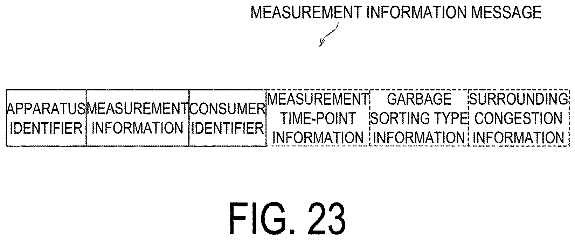

The incentive information manager 234a may determine that the consumer discards a waste in the recommended recovery apparatus, based on the measurement information message received from each resource recovery apparatus 100. In this case, the measurement information message includes, as illustrated in FIG. 23, the consumer identifier of the consumer specified by the consumer specifier 120 (see FIG. 2) in the resource recovery apparatus 100. The measurement information associated with the consumer identifier is measurement information on the waste discarded by the consumer.

Fourthly, the incentive information manager 234a gives a point to the consumer discarding the waste in the recommended recovery apparatus. The incentive information manager 234a may give the consumer a point indicated in the expected point information as is. The incentive information manager 234a may give the customer a point coefficient indicated by the expected point information and a point based on the amount of the waste the consumer actually discards (for example, "Point coefficient multiplied by the amount of waste").

The incentive information manager 234a may adjust a point to be given to the consumer, based on the measurement information message. For example, the incentive information manager 234a may increase the point when determining that the consumer has performed garbage sorting correctly. The incentive information manager 234a may increase the point when determining that the consumer has discarded a compressed waste (for example, when a ratio of a weight to a volume of the waste is large).

In the present variation, the incentive information manager 234a may adjust a point to be given to the consumer, based on the garbage sorting type of the waste discarded by the consumer. For example, a higher point may be configured for a recyclable trash, and a lower point may be configured for a combustible trash.

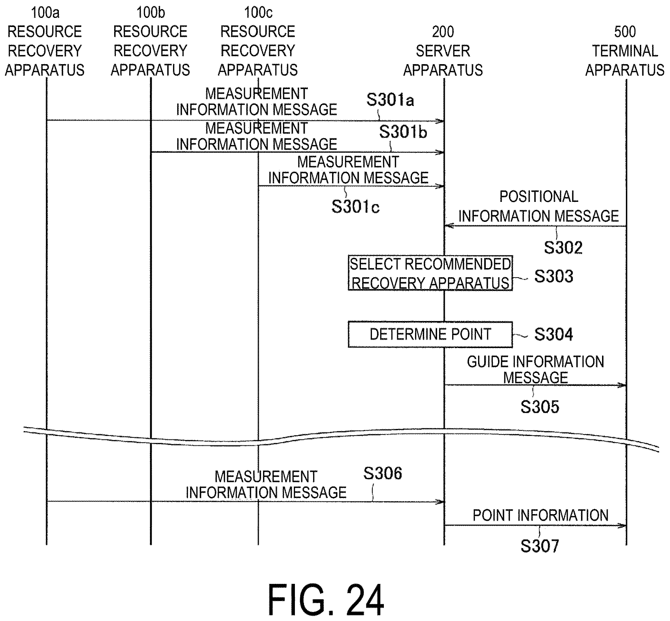

An entire operation example of the resource recovery system 1 according to the present variation will be described. FIG. 24 is a diagram illustrating the entire operation example of the resource recovery system 1 according to the present variation.

As illustrated in FIG. 24, in steps S301a to S301c, the resource recovery apparatuses 100a to 100c transmit the measurement information messages to the server apparatus 200.

In step S302, the terminal apparatus 500 transmits the location information messages to the server apparatus 200. Step S302 may be performed before or simultaneously with steps S301a to S301c.

In step S303, the recovery apparatus selector 231a in the server apparatus 200 selects the recommended recovery apparatus from among the resource recovery apparatuses 100a to 100c, based on the measurement information message received from each resource recovery apparatus 100 and/or the location information message received from the terminal apparatus 500.

In step S304, the incentive information manager 234a in the server apparatus 200 determines, based on the remaining capacity in each resource recovery apparatus 100 and/or the usage frequency of each resource recovery apparatus 100, a point to be given to the consumer on using the resource recovery apparatus 100.

In step S305, the communicator 210 in the server apparatus 200 transmits the guide information message as illustrated in FIG. 21 to the terminal apparatus 500. Here, the description is given assuming that the consumer moves to the resource recovery apparatus 100a and discards a waste in the resource recovery apparatus 100a, based on the information notified to the consumer from the terminal apparatus 500.

In step S306, the resource recovery apparatus 100a detects that the consumer discards the waste in the resource recovery apparatus 100a, and transmits the measurement information message as illustrated in FIG. 23 to the server apparatus 200.

In step S307, the incentive information manager 234a in the server apparatus 200 transmits, to the terminal apparatus 500, information indicating a point for the consumer discarding the waste in the resource recovery apparatus 100a.

In this way, in the resource recovery system 1 according to the present variation, the point to be given to the consumer on using the resource recovery apparatus 100 is determined based on the remaining capacity in each resource recovery apparatus 100 and/or the usage frequency of each resource recovery apparatus 100, which can encourage the consumer to take a disposal action for correcting disproportion in the waste amount between the plurality of resource recovery apparatuses 100.

Other Embodiments

In the first embodiment described above, the example is described in which the suggestion information includes the information indicating the suggestion for the recommended location of the target resource recovery apparatus. However, under the assumption that the location of the resource recovery apparatus 100 is frequently changed, the suggestion information may include information indicating a recommended time slot associated with the recommended location. The resource recovery apparatus 100 is differently demanded depending on a time slot of an event, for example, a demand at a spot may be high during the day, but a demand at another spot may be high at night. For this reason, the suggestion information preferably includes not only the information of the recommended location but also the information of the recommended time slot associated with the recommended location.

In the first embodiment and the variation thereof described above, the example is described in which the server apparatus 200 transmits the suggestion information to the communication apparatus 300. However, in a case that the resource recovery apparatus 100 is a self-propelled trash bin operated by remote control, the server apparatus 200 may operate the resource recovery apparatus 100 by remote control based on the suggestion information. For example, the server apparatus 200, in a case of changing the location of the resource recovery apparatus 100 having been placed, may operate the resource recovery apparatus 100 by remote control to move the resource recovery apparatus 100 to the location indicated by the suggestion information.

In the variation of the second embodiment described above, the example is described in which the server apparatus 200 includes the incentive information manager 234a that determines the incentive given upon use of each resource recovery apparatus 100. The incentive information manager 234a may determine content of the incentive given to the consumer, based on shop information indicating a shop where the waste discarded by the consumer is sold. The incentive information manager 234a may determine to give a point associated with the shop where the waste discarded by the consumer is sold, for example, a point usable only in the group (chain shops, retailers, or the like) to which the shop belongs.

This can encourage the consumer to discard the waste in the resource recovery apparatus 100. From the viewpoint of the shop (company), a packaging container or the like of a product sold by the shop is not discarded on the streets, which improves a company's image (brand enhancement), and further increases an ability to attract customers owing to the points.

As an example of a method for specifying a shop selling a product, a tag writer may be provided to the shop to write sales shop information to the electronic tag 52 included in the product (article 50) from the tag writer. The resource recovery apparatus 100 reads the sell shop information from the electronic tag 52 and transmits the sales shop information to the server apparatus 200. This allows the server apparatus 200 to determine the shop where the waste discarded by the consumer is sold.

The server apparatus 200 may transmit the product identifier identifying the waste (article 50) discarded in the resource recovery apparatus 100 to an external apparatus via the network 10. The external apparatus is a communication apparatus belonging to a manufacturer or a retailer. This allows the manufacturer or the retailer to grasp what product is discarded in the resource recovery apparatus 100. A product difficult to discard in the resource recovery apparatus 100 can be also grasped, which can be leveraged for product development (packaging container) improvement or selling method improvement.

The product identifier transmitted from the server apparatus 200 to the external apparatus may be or may not be associated with the consumer identifier. The product identifier being not associated with the consumer identifier also leads to protection of individual information.

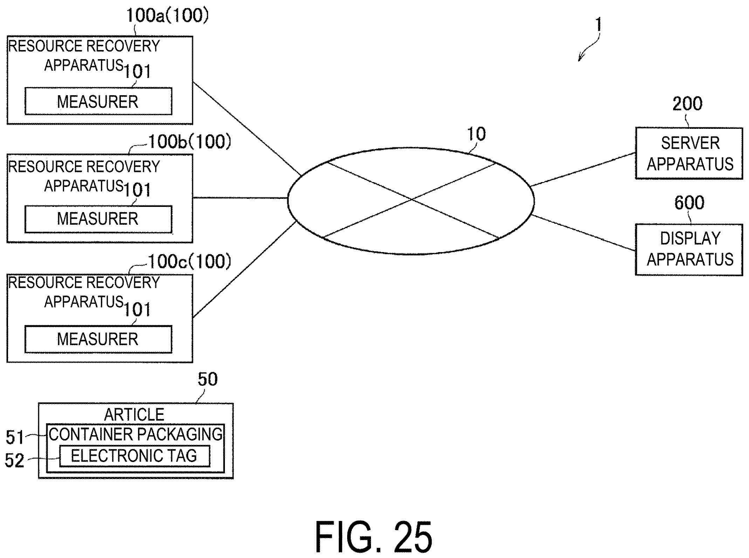

In the second embodiment described above, the example is described in which the server apparatus 200 transmits the guide information message to the terminal apparatus 500 in order to notify the consumer of the location of the recommended recovery apparatus. However, as illustrated in FIG. 25, in a case that a display apparatus 600 is placed at location visible from the consumer, the server apparatus 200 may transmit the information indicating the location of the recommended recovery apparatus to the display apparatus 600. The display apparatus 600 may be a display apparatus for a so-called digital signage. This can display the information indicating the location of the recommended recovery apparatus on the display apparatus 600 to notify the consumer of the location of the recommended recovery apparatus.

A program may be provided that causes a computer to execute each of the processing operations according to the first and second embodiments and the variations thereof described above. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM.

The first and second embodiments have been described above in detail with reference to the drawings; however, specific configurations are not limited to those described above, and various design modifications or the like can be made without departing from the gist of the present disclosure.

Note that the UN Summit of September 2015 adopted "Sustainable Development Goals (SDGs)" as 17 international goals. In the first and second embodiments, the resource recovery system, the server apparatus, the resource recovery apparatus, the terminal apparatus, the method, and the program can contribute to achievement of the goals, among these SDGs 17 international goals, for example, "7. Ensure access to affordable, reliable, sustainable and modern energy for all", "9. Build resilient infrastructure, promote inclusive and sustainable industrialization and foster innovation", "11. Make cities and human settlements inclusive, safe, resilient and sustainable", and "12. Ensure sustainable consumption and production patterns".

The present application claims priority to Japanese Patent Application No. 2020-048411 (filed on March 18, 2020) and Japanese Patent Application No. 2020-075638 (filed on April 21, 2020), and the entire contents of which are incorporated herein by reference.

**Claims**

1. A resource recovery system for recovering articles to be recycled as resources, the resource recovery system comprising:

   a plurality of resource recovery apparatuses configured to recover discarded articles by a person discarding waste; and
   a server apparatus configured to manage the plurality of resource recovery apparatuses, wherein
   the server apparatus is configured to generate suggestion information, based on a utilization result of each of the plurality of resource recovery apparatuses and a location of each of the plurality of resource recovery apparatuses, the suggestion information including information indicating a suggestion for a location of a target resource recovery apparatus, and
   the target resource recovery apparatus is a resource recovery apparatus to be newly placed and/or one of the plurality of resource recovery apparatuses, that has been located and of which location is to be changed.

**2.** The resource recovery system according to claim 1, wherein
a resource recovery apparatus of the plurality of resource recovery apparatuses is configured to transmit location information to the server apparatus, the location information indicating the location of the resource recovery apparatus.

**3.** The resource recovery system according to claim 1 or 2, wherein
a resource recovery apparatus of the plurality of resource recovery apparatuses is configured to transmit measurement information to the server apparatus, the measurement information that the server apparatus is to use to specify the utilization result of the resource recovery apparatus.

**4.** The resource recovery system according to claim 3, wherein
the measurement information is configured to include information indicating an amount of articles accumulated or a remaining capacity in the resource recovery apparatus.

**5.** The resource recovery system according to claim 3 or 4, wherein
the measurement information is configured to include information indicating the number of times an opening/closing provided to the resource recovery apparatus is opened and/or information indicating a length of a period the opening/closing is open.

**6.** The resource recovery system according to claim 3 or 4, wherein
the server apparatus is configured to

specify, a geographical region based on the utilization result and the location of each of the plurality of resource recovery apparatuses, the geographical region where an amount of discarded articles per unit time exceeds a predetermined amount, and
generate the suggestion information including information suggesting a location in the geographical region as a location of the target resource recovery apparatus.

**7.** The resource recovery system according to claim 6, wherein
the server apparatus is configured to generate the suggestion information including information suggesting changing, to a location inside the geographical region, a location of a resource recovery apparatus, of the plurality of resource recovery apparatuses, having been located outside the geographical region.

**8.** The resource recovery system according to any one of claims 1 to 7, wherein
the server apparatus is configured to generate the suggestion information further including information suggesting a storage capacity for storing the articles in the target resource recovery apparatus.

**9.** The resource recovery system according to any one of claims 1 to 8, wherein
the server apparatus is configured to generate the suggestion information based on a type of articles recovered by each of the plurality of resource recovery apparatuses, the suggestion information further including information suggesting a sorting type, the sorting type indicating a type of the articles to be recovered by the target resource recovery apparatus.

**10.** The resource recovery system according to claim 9, wherein

each of the plurality of resource recovery apparatuses is configured to include articles specifier configured to specify the articles, and
the server apparatus is configured to specify, based on a result of the specification by the articles specifier, the type of the articles recovered by each of the plurality of resource recovery apparatuses.

**11.** The resource recovery system according to any one of claims 1 to 10, wherein
the server apparatus is configured to generate the suggestion information further based on event information related to an event to be held in future.

**12.** The resource recovery system according to claim 11, wherein

the server apparatus is configured to manage the utilization result in association with an event type,
the event information is configured to include event type information indicating the event type, and

the server apparatus is configured to generate the suggestion information, based on the utilization result corresponding to the event type indicated by the event type information.

13. The resource recovery system according to claim 11 or 12, wherein

the event information is configured to include event-holding area information indicating an event-holding area where the event is to be held, and
the server apparatus is configured to generate the suggestion information, based on the event-holding area information, the suggestion information including information indicating a suggestion for a location, inside the event-holding area, of the target resource recovery apparatus.

14. The resource recovery system according to any one of claims 11 to 13, wherein

the event information is configured to include event-holding period information indicating a future period during which the event is to be held, and
the server apparatus is configured to generate the suggestion information, based on the event-holding period information, the suggestion information including information indicating a suggestion for the location of the target resource recovery apparatus during the future period.

15. The resource recovery system according to claim 14, wherein
the server apparatus is configured to generate the suggestion information further based on weather information on predicted weather during the future period.

16. The resource recovery system according to claim 12 or any one of claims 13 to 15 citing claim 12, wherein

the event information is configured to include participant headcount information indicating the number of participants participating in the event, and
the server apparatus is configured to generate the suggestion information, based on the participant headcount information and/or the event type information, the suggestion information further comprising placement count information suggesting the number of the target resource recovery apparatus and/or type information suggesting the type of articles to be recovered by the target resource recovery apparatus.

17. The resource recovery system according to any one of claims 1 to 16, wherein

the server apparatus is configured to transmit the suggestion information to a communication apparatus belonging to a predetermined business operator, and
the predetermined business operator is either a business operator who locates the target resource recovery apparatus or a business operator who changes the location of the target resource recovery apparatus.

18. A server apparatus used in a resource recovery system for recovering articles to be recycled as resources, the server apparatus comprising:

a communicator configured to communicate with a plurality of resource recovery apparatuses configured to recover the discarded articles by a person discarding waste; and
a processing unit configured to generate suggestion information, based on a utilization result of each of the plurality of resource recovery apparatuses and a location of each of the plurality of resource recovery apparatuses, the suggestion information including information indicating a suggestion for the location of the target resource recovery apparatus, wherein
the target resource recovery apparatus is a resource recovery apparatus to be newly located and/or one of the plurality of resource recovery apparatuses, that has been located and of which location is to be changed.

19. A resource recovery apparatus, in a resource recovery system for recovering articles to be recycled as resources, configured to recover the discarded articles by a person discarding waste, the resource recovery apparatus comprising:

a measurer configured to generate measurement information for a server apparatus to specify a utilization result of the resource recovery apparatus;
a positioner configured to generate location information indicating a location of the resource recovery apparatus;

and

a communicator configured to transmit, to the server apparatus, the measurement information and the location information in association with each other.

20. A method performed by a resource recovery system for recovering articles to be recycled as resources, the method comprising:

communicating with a plurality of resource recovery apparatuses configured to recover discarded articles by a person discarding waste;

generating suggestion information, based on a utilization result of each of the plurality of resource recovery apparatuses and a location of each of the plurality of resource recovery apparatuses, the suggestion information including information indicating a suggestion for a location of a target resource recovery apparatus, wherein the target resource recovery apparatus is a resource recovery apparatus to be newly placed and/or one of the plurality of resource recovery apparatuses, that has been located and of which location is to be changed.

FIG. 1

1

200 SERVER APPARATUS

300 COMMUNICATION APPARATUS

10

100a(100) RESOURCE RECOVERY APPARATUS
101 MEASURER

100b(100) RESOURCE RECOVERY APPARATUS
101 MEASURER

100c(100) RESOURCE RECOVERY APPARATUS
101 MEASURER

50 ARTICLE
51 CONTAINER PACKAGING
52 ELECTRONIC TAG

100

RESOURCE RECOVERY APPARATUS

120

CONSUMER
SPECIFIER

170

140

COMMUNICATOR

WASTE
SPECIFIER

130

CONTROLLER

102

POSITIONER

110

150

STORAGE SPACE

101

MEASURER

160

POWER
SUPPLY

103

FIG. 2

MEASUREMENT INFORMATION MESSAGE

| APPARATUS IDENTIFIER | MEASUREMENT INFORMATION | POSITIONAL INFORMATION | MEASUREMENT TIME-POINT INFORMATION | GARBAGE SORTING TYPE INFORMATION |
|---|---|---|---|---|
| | | | | |

# FIG. 3

200

SERVER APPARATUS

PROCESSING PROCESSOR ~230

231
MEASUREMENT HISTORY MANAGER

232
UTILIZATION RESULT CALCULATOR

233
REFERENCE INFORMATION GENERATOR

234
REGION SPECIFIER

235
SUGGESTION INFORMATION GENERATOR

236
SUGGESTION INFORMATION TRANSMITTER

210
COMMUNICATOR

220
STORAGE

# FIG. 4

MEASUREMENT HISTORY INFORMATION

| APPARATUS IDENTIFIER | MEASUREMENT INFORMATION #1 | MEASUREMENT INFORMATION #2 | MEASUREMENT INFORMATION #3 | ... | MEASUREMENT INFORMATION #n |
|---|---|---|---|---|---|
| | POSITIONAL INFORMATION #1 | POSITIONAL INFORMATION #2 | POSITIONAL INFORMATION #3 | | POSITIONAL INFORMATION #n |
| | TIME-POINT INFORMATION #1 | TIME-POINT INFORMATION #2 | TIME-POINT INFORMATION #3 | | TIME-POINT INFORMATION #n |

# FIG. 5

REFERENCE INFORMATION

| APPARATUS IDENTIFIER | POSITIONAL INFORMATION | GARBAGE SORTING TYPE INFORMATION | UTILIZATION RESULT INFORMATION |
|---|---|---|---|

# FIG. 6

⊘ : POSITION OF RESOURCE RECOVERY APPARATUS WITH
HIGH UTILIZATION RESULT (GARBAGE SORTING TYPE A)

○ : POSITION OF RESOURCE RECOVERY APPARATUS WITH
LOW UTILIZATION RESULT (GARBAGE SORTING TYPE A)

● : RECOMMENDED PLACEMENT POSITION OF
TARGET RESOURCE RECOVERY APPARATUS

# FIG. 7

FIG. 8

REFERENCE INFORMATION

| APPARATUS IDENTIFIER | POSITIONAL INFORMATION | GARBAGE SORTING TYPE INFORMATION | UTILIZATION RESULT INFORMATION | EVENT TYPE INFORMATION |
|---|---|---|---|---|

# FIG. 9

200

SERVER APPARATUS

PROCESSING PROCESSOR — 231 — 230

MEASUREMENT HISTORY MANAGER — 232

210

COMMUNICATOR

UTILIZATION RESULT CALCULATOR — 233

REFERENCE INFORMATION GENERATOR — 234

REGION SPECIFIER — 237

EVENT INFORMATION ACQUIRER — 235

SUGGESTION INFORMATION GENERATOR — 236

SUGGESTION INFORMATION TRANSMITTER

220

STORAGE

# FIG. 10

EVENT INFORMATION

| EVENT TYPE INFORMATION | EVENT-HOLDING AREA INFORMATION | EVENT-HOLDING PERIOD INFORMATION | PARTICIPANT HEADCOUNT INFORMATION |
|---|---|---|---|

# FIG. 11

FIG. 12

EP 4 123 522 A1

MEASUREMENT INFORMATION MESSAGE

| APPARATUS IDENTIFIER | MEASUREMENT INFORMATION | POSITIONAL INFORMATION | MEASUREMENT TIME-POINT INFORMATION | GARBAGE SORTING TYPE INFORMATION | SURROUNDING CONGESTION INFORMATION |
|---|---|---|---|---|---|

FIG. 13

500

TERMINAL APPARATUS

510 COMMUNICATOR

520 POSITIONER

530 USER INTERFACE

DISPLAY

531  532

OPERATOR

540 CONTROLLER

550 WASTE SPECIFIER

FIG. 14

POSITIONAL INFORMATION MESSAGE

| APPARATUS IDENTIFIER | POSITIONAL INFORMATION | WASTE TYPE INFORMATION | WASTE AMOUNT INFORMATION | DESTINATION INFORMATION |
|---|---|---|---|---|

# FIG. 15

GUIDE INFORMATION MESSAGE

| RECOMMENDED RECOVERY APPARATUS INFORMATION | ROUTE INFORMATION | MAP INFORMATION |
|---|---|---|

# FIG. 16

531

POSITION OF RECOMMENDED
RECOMMENDED ROUTE     RECOVERY APPARATUS

POSITION OF TERMINAL APPARATUS

# FIG. 17

200

SERVER APPARATUS

230

PROCESSING PROCESSOR 231a

RECOVERY APPARATUS SELECTOR

232a

ROUTE DETERMINER

233a

GUIDE INFORMATION GENERATOR

210

COMMUNICATOR

220

STORAGE

FIG. 18

FIG. 19

200

SERVER APPARATUS

230

PROCESSING
PROCESSOR

231a

RECOVERY
APPARATUS
SELECTOR

232a

ROUTE
DETERMINER

233a

GUIDE INFORMATION
GENERATOR

234a

INCENTIVE
INFORMATION
MANAGER

210

COMMUNICATOR

220

STORAGE

# FIG. 20

GUIDE INFORMATION MESSAGE

| RECOVERY APPARATUS INFORMATION #1 | EXPECTED POINT INFORMATION #1 | RECOVERY APPARATUS INFORMATION #2 | EXPECTED POINT INFORMATION #2 | MAP INFORMATION |
|---|---|---|---|---|

# FIG. 21

531

EXPECTED POINT
INFORMATION #2
POSITION OF
RECOMMENDED
RECOVERY APPARATUS #2
EXPECTED POINT
INFORMATION #1
POSITION OF RECOMMENDED
RECOVERY APPARATUS #1

20P

10P

POSITION OF TERMINAL APPARATUS

# FIG. 22

MEASUREMENT INFORMATION MESSAGE

| APPARATUS IDENTIFIER | MEASUREMENT INFORMATION | CONSUMER IDENTIFIER | MEASUREMENT TIME-POINT INFORMATION | GARBAGE SORTING TYPE INFORMATION | SURROUNDING CONGESTION INFORMATION |
|---|---|---|---|---|---|

# FIG. 23

| 100a<br>RESOURCE<br>RECOVERY<br>APPARATUS | 100b<br>RESOURCE<br>RECOVERY<br>APPARATUS | 100c<br>RESOURCE<br>RECOVERY<br>APPARATUS | 200<br>SERVER<br>APPARATUS | 500<br>TERMINAL<br>APPARATUS |

MEASUREMENT INFORMATION MESSAGE S301a

MEASUREMENT INFORMATION MESSAGE S301b

MEASUREMENT INFORMATION MESSAGE S301c

POSITIONAL INFORMATION MESSAGE S302

SELECT RECOMMENDED RECOVERY APPARATUS — S303

DETERMINE POINT — S304

GUIDE INFORMATION MESSAGE S305

MEASUREMENT INFORMATION MESSAGE S306

POINT INFORMATION S307

# FIG. 24

FIG. 25

EP 4 123 522 A1

## INTERNATIONAL SEARCH REPORT

| | International application No. |
|---|---|
| | PCT/JP2021/010945 |

**A. CLASSIFICATION OF SUBJECT MATTER**

G06Q 10/00(2012.01)i; B65F 5/00(2006.01)i; G06Q 50/26(2012.01)i
FI: G06Q10/00 400; B65F5/00; G06Q50/26

According to International Patent Classification (IPC) or to both national classification and IPC

**B. FIELDS SEARCHED**

Minimum documentation searched (classification system followed by classification symbols)
G06Q10/00; B65F5/00; G06Q50/26

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-141499 A (HITACHI SYSTEMS, LTD.) 08 August 2016 (2016-08-08) paragraphs [0057]-[0070] | 19 |
| Y | JP 11-106004 A (HITACHI, LTD.) 20 April 1999 (1999-04-20) paragraphs [0015]-[0019] | 19 |
| A | JP 2007-310107 A (TAMAI, Ryushi) 29 November 2007 (2007-11-29) paragraphs [0050]-[0065] | 1-20 |
| A | JP 2006-99285 A (CENTRAL RESEARCH INSTITUTE OF ELECTRIC POWER INDUSTRY) 13 April 2006 (2006-04-13) paragraphs [0095]-[0111] | 1-20 |

☐ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 May 2021 (31.05.2021) | 08 June 2021 (08.06.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

## INTERNATIONAL SEARCH REPORT
Information on patent family members

International application No.

PCT/JP2021/010945

| Patent Documents referred in the Report | Publication Date | Patent Family | Publication Date |
|---|---|---|---|
| JP 2016-141499 A | 08 Aug. 2016 | (Family: none) | |
| JP 11-106004 A | 20 Apr. 1999 | (Family: none) | |
| JP 2007-310107 A | 29 Nov. 2007 | (Family: none) | |
| JP 2006-99285 A | 13 Apr. 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009516262 W
- JP 2020048411 A
- JP 2020075638 A